Europäisches Patentamt

European Patent Office

Office européen des brevets

(19)

(11) EP 0 846 378 B1

(12) FASCICULE DE BREVET EUROPEEN

(45) Date de publication et mention
de la délivrance du brevet:
**06.10.1999 Bulletin 1999/40**

(21) Numéro de dépôt: **96929359.6**

(22) Date de dépôt: **22.08.1996**

(51) Int Cl.$^6$: **H04B 7/04**

(86) Numéro de dépôt international:
**PCT/FR96/01307**

(87) Numéro de publication internationale:
**WO 97/08849 (06.03.1997 Gazette 1997/11)**

(54) **PROCEDE ET DISPOSITIF DE MULTIPLEXAGE/DEMULTIPLEXAGE SPATIAL DE SIGNAUX RADIOELECTRIQUES POUR SYSTEME RADIO MOBILE SDMA**

VERFAHREN UND ANORDNUNG ZUR RÄUMLICHEN MULTIPLEXIERUNG/DEMULTIPLEXIERUNG VON FUNKSIGNALEN IN EINEM SDMA-MOBILFUNKSYSTEM

METHOD AND DEVICE FOR SPATIAL MULTIPLEXING-DEMULTIPLEXING OF RADIO SIGNALS FOR AN SDMA MOBILE RADIO SYSTEM

(84) Etats contractants désignés:
**DE DK FI FR GB SE**

(30) Priorité: **22.08.1995 FR 9509975**
**22.08.1995 FR 9509976**

(43) Date de publication de la demande:
**10.06.1998 Bulletin 1998/24**

(73) Titulaire: **THOMSON-CSF**
**75008 Paris (FR)**

(72) Inventeurs:
- **THIBAULT, Joel, c/o Thomson-CSF SCPI**
  **F-94117 Arcueil Cédex (FR)**
- **CHEVALIER, Pascal, c/o Thomson-CSF SCPI**
  **F-94117 Arcueil Cédex (FR)**
- **PIPON, François, c/o Thomson-CSF SCPI**
  **F-94117 Arcueil Cédex (FR)**
- **MONOT, Jean-Jacques, c/o Thomson-CSF SCPI**
  **F-94117 Arcueil Cédex (FR)**
- **MULTEDO, Gilbert, c/o Thomson-CSF SCPI**
  **F-94117 Arcueil Cédex (FR)**

(74) Mandataire: **Lincot, Georges et al**
**Thomson-CSF Propriété Intellectuelle,**
**Département Brevets,**
**13, Avenue du Président Salvador Allende**
**94117 Arcueil Cédex (FR)**

(56) Documents cités:
**WO-A-93/12590**           **US-A- 5 260 968**

- **IEE PROCEEDINGS F (RADAR AND SIGNAL PROCESSING), DEC. 1993, UK, vol. 140, no. 6, ISSN 0956-375X, pages 362-370, XP000605067 CARDOSO J F ET AL: "Blind beamforming for non-Gaussian signals" cité dans la demande**
- **SIGNAL PROCESSING, APRIL 1994, NETHERLANDS, vol. 36, no. 3, ISSN 0165-1684, pages 287-314, XP000435669 COMON P: "Independent component analysis, a new concept?" cité dans la demande**
- **CONFERENCE RECORD OF THE TWENTY-SEVENTH ASILOMAR CONFERENCE ON SIGNALS, SYSTEMS & COMPUTERS, PACIFIC GROVE (US), 1 - 3 Novembre 1993, LOS ALAMITOS (US), pages 1432-1436, XP000438543 D.GERLACH: "BASE STATION TRANSMITTER ANTENNA ARRAYS WITH MOBILE TO BASE FEEDBACK"**

EP 0 846 378 B1

## Description

La présente invention concerne un procédé et un dispositif de multiplexage/démultiplexage spatial de signaux radioélectriques organisés en trames et transmis en duplex sur un même canal fréquentiel et temporel ne nécessitant pas de calibration. Elle s'applique, en particulier, aux radiocommunications cellulaires entre au moins une station de base et plusieurs mobiles.

Avec l'accroissement constant de la demande de communications mobiles et la limitation du nombre de canaux alloués aux opérateurs des réseaux de radiocommunications cellulaires, les problèmes de saturation vont devenir cruciaux dans les années à venir.

Des techniques classiques permettent actuellement de multiplexer les communications en fréquence (AMRF), en temps (AMRT), ou en code (AMRC).

L'AMRF (Accès Multiple à Répartition de Fréquence) consiste à allouer à chaque communication une paire de fréquences (une pour la voie descendante et une pour la voie montante). Toute seule, cette technique très simple de multiplexage n'offre quasiment pas de perspective d'amélioration de l'efficacité spectrale.

L'AMRT (Accès Multiple à Répartition dans le Temps) consiste à allouer à chaque communication un intervalle temporel précis. Seule, cette technique, déjà optimisée pour amélioration de l'efficacité spectrale dans le cadre de la transmission de phonie par exploitation des silences présents sur le signal de parole, laisse entrevoir peu d'amélioration supplémentaire sur ce plan.

L'AMRC (Accès Multiple à Répartition dans les Codes) consiste à allouer à chaque communication un code, définissant une loi de saut en fréquence sur des intervalles de temps courts. Même si elle permet une certaine augmentation de l'efficacité spectrale (saturation progressive par dégradation du signal et non brutale par interruption du service comme dans le cas des deux techniques précédentes), cette méthode reste lourde et chère à mettre en oeuvre.

Plusieurs voies sont actuellement explorées pour améliorer les capacités des systèmes de communication cellulaires à savoir : la diversification des cellules et des formes d'ondes avec la mise en oeuvre de cellules de tailles de plus en plus réduites ("microcell" et "nanocell" du projet de normalisation ATDMA, abréviation anglo-saxonne pour "Advanced Time Division Multiple Access", pour les zones urbaines), et surtout une nouvelle méthode de multiplexage pouvant se combiner aux techniques existantes : l'Accès Multiple à Répartition Spatial (AMRS ou SDMA en terminologie anglo-saxonne).

Cette technique est basée sur l'idée que les signaux radios correspondant à plusieurs liaisons entre une station de base et des mobiles peuvent être dans de nombreux cas décorrélés spatialement.

L'exploitation de cette décorrélation permet de séparer les canaux spatiaux (même s'ils occupent tous un même canal fréquentiel et temporel) au moyen d'un système émission/réception multivoie associé à une base d'antennes adaptée à la gamme de fréquences utilisée.

Plusieurs méthodes mettant en oeuvre ce concept ont déjà été proposées. Une première méthode est basée sur des techniques d'estimation de direction d'arrivée comme le système décrit dans le brevet de Richard ROY (Brevet US PCT/US92/10074, 12/1991, intitulé Spatial Division Multiple Access Wireless Communication System). Une deuxième méthode utilise des caractéristiques de cyclostationnarité des signaux de transmissions numériques pour les séparer par des traitements en aveugle (Brevet US N° 5260968, du 9/11/93, intitulé Method and Apparatus for Multiplexing Communications Signals through Blind Adaptative Spatial Filtering" de William A. GARDNER et Stephan V. SCHELL).

Pour la première méthode, l'estimation des directions d'arrivées de différentes sources radioélectriques à partir des signaux reçus sur une base d'antennes, nécessite la parfaite maîtrise du front d'onde ce qui entraîne une contrainte de calibration de la base d'antennes utilisée. Outre le surcoût induit par la calibration, l'écart type de l'estimation indirecte du vecteur directeur à partir de la direction d'arrivée estimée et de la table de calibration de la base d'antennes est nettement plus important que celui obtenu par des méthodes d'estimation directe. Le vecteur directeur correspond à la valeur prise par la fonction de transfert de la base d'antennes pour l'azimut, le site et la fréquence porteuse de l'onde électromagnétique incidente émise par une source. Cette information est ensuite exploitée par le traitement de multiplexage spatial.

Pour la deuxième méthode, les techniques de séparation à l'ordre 2 utilisant la cyclostationnarité imposent sur les signaux à séparer soit des différences de rythmes symbole soit des décalages de fréquences porteuses pour fonctionner. Ces limitations rendent ces techniques inadaptées aux configurations de canaux formés dans des radiocommunications entre une station de base et des mobiles présentant des multitrajets décorrélés qui sont non séparables par les méthodes précédentes et donc non opérationnelles dans la plupart des zones urbaines.

Enfin, les techniques de traitement d'antenne mentionnées précédemment, mettent en oeuvre pour séparer les différents signaux reçus une structure de filtrage dite purement spatiale constitue d'un gain complexe par voie de réception. Les capacités d'antibrouillage de ce type de structure en terme de nombre de brouilleurs indépendants réjectables (deux trajets décorrélés issus d'une même source constituent deux brouilleurs indépendants) sont sous-optimales. En effet, le filtre spatial s'adapte sur un trajet utile suivi par une source et rejette tous les autres trajets, aussi bien les trajets utiles décorrélés suivis par cette source que les trajets suivis par les signaux brouilleurs.

Dans la suite de la description, les termes "capteurs" et "antennes" seront utilisés indifféremment ainsi que les termes "multicapteurs", "multivoie", et "réseau multicapteur" et base d'antennes", sachant d'autre part qu'une base d'antennes, ou réseau multicapteur, forme un nombre de voies de transmission égal au nombre d'antennes, ou de capteurs.

L'invention a pour but de pallier les imperfections et limitations des méthodes précitées.

A cet effet, l'invention a pour objet un procédé de multiplexage/démultiplexage spatial de signaux radioélectriques organisés en trames et transmis en duplex entre au moins une station de base et plusieurs mobiles communiquant sur un même canal fréquentiel et temporel au moyen d'un récepteur et d'un émetteur multivoie intégré dans la station de base et couplés à une base d'antennes.

Une première variante à l'invention s'applique particulièrement à des signaux radioélectriques non gaussiens. Le procédé objet de cette première variante est caractérisé en ce qu'il consiste :

- à estimer l'information spatiale relative à chaque mobile à partir du signal reçu par le récepteur multivoie, pour les fréquences de réception et d'émission, au moyen de méthodes de séparation de sources en aveugle, et à partir de cette information,
- à isoler par filtrage spatial, en présence ou non de multitrajets dans le canal, les trajets respectifs à chaque mobile dont la puissance est supérieure à un seuil déterminé pour permettre le démultiplexage spatial, et
- à émettre simultanément en direction du trajet principal de chaque mobile le signal qui lui est destiné, en protégeant chaque mobile vis-à-vis des signaux émis vers les autres par filtrage spatial avec des contraintes d'annulation pour permettre le multiplexage spatial.

Une deuxième variante à l'invention s'applique aux signaux radioélectriques numériques organisés en trames comportant des séquences connues à priori. Le procédé objet de cette deuxième variante est caractérisé en ce qu'il consiste :

- à estimer l'information spatiale relative à chaque mobile, à partir du signal reçu par le récepteur multivoie, pour les fréquences de réception et d'émission, au moyen de méthodes de filtrage, en exploitant les séquences connues a priori, et à partir de cette information,
- à isoler, en présence ou non de multitrajets dans le canal, les trajets respectifs à chaque mobile dont la puissance est supérieure à un seuil déterminé, et à démoduler le signal reçu de chacun des mobiles en liaison avec la station de base, pour permettre le démultiplexage spatial, et
- à émettre simultanément en direction du trajet principal de chaque mobile le signal qui lui est destiné, en protégeant chaque mobile vis-à-vis des signaux émis vers les autres par filtrage spatial avec des contraintes d'annulation pour permettre le multiplexage spatial.

L'invention présentent plusieurs avantages.

Un avantage de la première variante à la présente invention est de permettre, pour l'estimation des vecteurs directeurs associés aux différents signaux mobiles, d'appliquer une méthode de séparation de sources en aveugle ne nécessitant ni la maîtrise du front d'onde ni connaissance à priori sur la forme d'onde (méthode transparente). Le procédé selon la première variante à l'invention exploite pour cela le caractère non Gaussien des signaux sources. Cette hypothèse est vérifiée pour la plupart des modulations utilisées dans les communications radio analogiques ou numériques notamment pour les modulations à enveloppe constante.

Un avantage de la deuxième variante à l'invention est de permettre, pour la réalisation du multiplexage spatial de transmissions radio entre plusieurs mobiles et une station de base, des techniques d'adaptation de filtres spatiaux ou spatio-temporels sur réplique (séquence d'apprentissage) jusqu'à présent essentiellement mises en oeuvre pour la lutte anti-brouillage dans les systèmes de radiocommunication de défense. La plupart des systèmes de radiocommunications cellulaires numériques utilisent, pour notamment des besoins de synchronisation et d'égalisation, des séquences d'apprentissage insérées dans des formes d'ondes organisées en trames. L'utilisation de cette information, connue a priori, permet la mise en oeuvre de traitements plus performants et moins contraignants au niveau des modulations utilisées que les techniques dites "transparentes".

Parmi les méthodes décrites ci-après, lors de la description de la deuxième variante, celles mettant en oeuvre des structures de filtrage spatio-temporelles (un filtre FIR par voie, abréviation anglo-saxonne pour "Finite Impulsional Response"), permettent en présence de multitrajets, d'augmenter les capacités de réjection des signaux brouilleurs et d'optimisation de taux d'erreur après démodulation d'un système multivoie par rapport aux structures de filtrage bande étroite (un coefficient par voie) ; la maîtrise du front d'onde n'est pas nécessaire, ce qui permet d'utiliser une base d'antennes non calibrée; et les modulations compatibles de ces méthodes englobent toutes les modulations numériques y compris les formes d'ondes gaussiennes.

D'autres avantages et caractéristiques de la présente invention apparaîtront plus clairement à la lecture de la description qui suit et des figures annexées qui représentent:

- la figure 1, les principales étapes du procédé selon l'invention,
- la figure 2, un schéma fonctionnel d'un dispositif pour la mise en oeuvre du procédé selon l'invention,
- la figure 3, un exemple de structure d'une "supertrame" prenant en compte les contraintes du mode AMRS,
- la figure 4a, un schéma fonctionnel précisant l'interface entre le contrôleur AMRS et les moyens d'estimation et de multiplexage/démultiplexage spatial, selon la deuxième variante à l'invention,
- la figure 4b, un schéma fonctionnel précisant l'interface entre le contrôleur AMRS et les moyens d'estimation et de multiplexage/démultiplexage spatial, selon la première variante à l'invention,
- la figure 5, un schéma de la décomposition d'un canal fréquentiel et temporel en sous-canaux spatiaux,
- la figure 6, une illustration de la notion de canal fréquentiel et temporel,
- la figure 7, une table de corrélation spatiale des mobiles présents dans la cellule (pris deux à deux), et
- la figure 8, un schéma fonctionnel d'un module de commutation et de tarage du dispositif pour la mise en oeuvre du procédé selon l'invention.
- la figure 9, une structure filtre spatial multicapteurs + égaliseur/démodulateur monocapteur, selon la deuxième variante à l'invention,
- la figure 10, une structure générale : filtre spatio-temporel multicapteur + égaliseur/démodulateur monocapteur, selon la deuxième variante à l'invention,
- la figure 11, une première implémentation correspondant à une voie de transmission de la structure générale de la figure 10 intitulée FAST-BBT-DFE, selon la deuxième variante à l'invention, et
- la figure 12, une deuxième implémentation de la structure générale de la figure 10 dénommée FAST-DFE, selon la deuxième variante à l'invention.

Sur les figures, les éléments homologues sont désignés par le même repère.

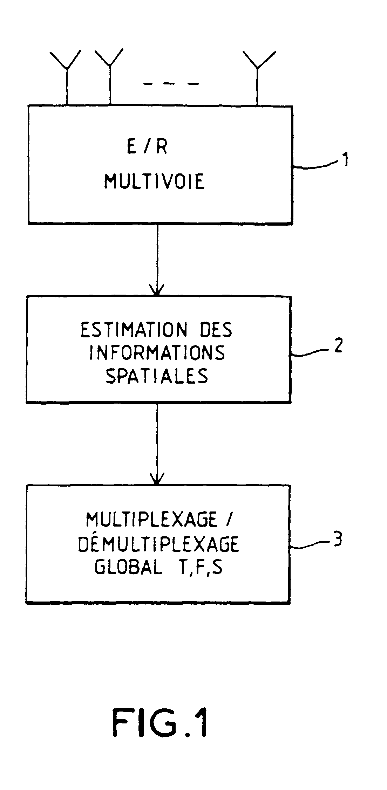

Le procédé selon la première variante à l'invention dont les principales étapes sont illustrées à la figure 1 consiste, à partir d'une émission/réception multivoie 1, à estimer 2 les informations spatiales concernant chaque source mobile active présente dans la cellule aux deux fréquences, supports de l'émission et de la réception alternativement, puis à partir de ces informations à réaliser un multiplexage/démultiplexage global 3 (temporel, fréquentiel et spatial) optimal des communications.

L'information spatiale caractérisant un mobile est définie par les vecteurs directeurs des multitrajets du signal reçu sur la base d'antennes. Ces vecteurs directeurs représentent la réponse (amplitude et phase) de la base d'antennes à un signal incident suivant un azimut caractéristique de la position de la source.

L'estimation 2 des vecteurs directeurs de chaque source utilise des signaux reçus de la source d'intérêt en configuration mono-émission. Autrement dit dans la forme d'onde organisée en trames, une plage temporelle périodique, appelée par la suite "burst", est allouée à chaque mobile pour la réactualisation de son information spatiale. La méthode appliquée pour cette estimation 2 exploite donc le caractère non gaussien des signaux sources à traiter et fonctionne parfaitement en l'absence de calibration de la base d'antennes. Par contre, compte-tenu de l'écart généralement important entre les fréquences des liaisons montantes (mobiles vers station de base) et descendantes (station de base vers mobiles), l'estimation réalisée sur les signaux reçus et utilisée pour un filtrage spatial en réception n'est pas transposable pour le filtrage spatial en émission. C'est pourquoi, dans le procédé selon la première variante à l'invention une permutation périodique des groupes de fréquences des liaisons montantes et descendantes peut être effectuée de façon à permettre l'apprentissage et la réactualisation de l'information spatiale également aux fréquences d'émission.

La plupart des stations de base gèrent plusieurs canaux fréquentiel en mode duplex et dans ce contexte le procédé selon la première variante à l'invention peut permettre d'assurer une gestion globale de ces canaux à l'intérieur desquels le multiplexage spatial génère des sous-canaux AMRS de façon à regrouper préférentiellement sur un même canal fréquentiel et temporel les mobiles les moins corrélés spatialement.

De plus, le procédé selon la première variante à l'invention réactualise les coefficients des filtres spatiaux en réception et en émission, réalisant respectivement un démultiplexage spatial et un multiplexage spatial en prenant en compte les défauts d'appairage, conséquence d'erreurs résiduelles de tarage des voies en émission et en réception.

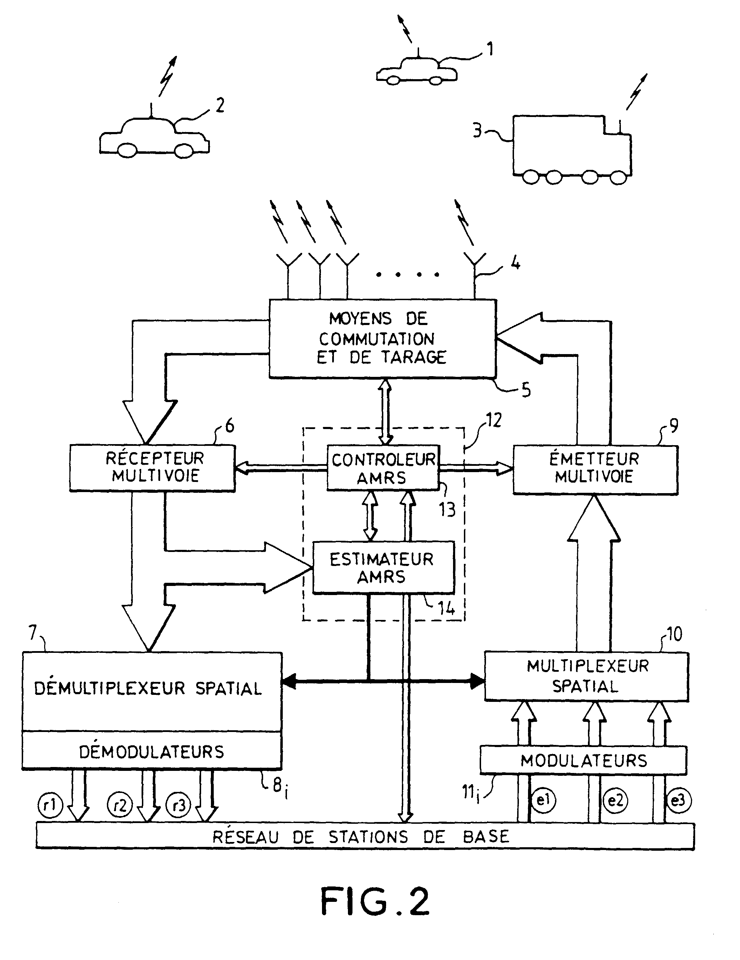

Un dispositif pour la mise en oeuvre du procédé selon la première variante à l'invention est schématisé par la figure 2 et comporte les sous-ensembles suivants :

- une base d'antennes 4 couplée à des moyens 5 de commutation de fréquence et de tarage,
- un récepteur multivoie 6 comportant des moyens de transposition/amplification radio, et des moyens de conversion analogique/numérique multivoies non représentés,
- un démultiplexeur spatial 7,
- un nombre déterminé de démodulateurs 8i égal au nombre maximal de canaux spatiaux fixé par canal fréquentiel, par exemple trois démodulateurs pour une base comportant dix antennes,
- un émetteur multivoie 9 comportant des moyens de transposition/amplification radio et de conversion numérique/ analogique multivoies non représentés,
- un multiplexeur spatial 10,
- un nombre déterminé de modulateurs 11i égal au nombre de démodulateurs 8i du récepteur multivoie 6,
- un module de traitement numérique 12, délimité par une ligne fermée en trait discontinu, comportant un contrôleur 13 et un estimateur 14 spécifiques au traitement AMRS, qui est au coeur du dispositif pour la mise en oeuvre du procédé selon la première variante à l'invention.

La mise en oeuvre du concept de l'AMRS au moyen des méthodes de séparation de sources en aveugle, par le matériel qu'il nécessite, les contraintes des traitements appliqués et les nouvelles possibilités qu'il offre, nécessite une prise en compte système. Ceci se traduit par un certain nombre de tâches de contrôle et de gestion indispensables à une intégration optimale du multiplexage spatial dans les réseaux de communications radiocellulaires. Ces tâches de contrôle et de gestion sont assurées dans le dispositif pour la mise en oeuvre du procédé selon la première variante à l'invention par le module de traitement numérique 12.

La séparation, au niveau de la station de base, des signaux en provenance ou à destination des différents mobiles "actifs" c'est-à-dire en communication avec la station de base, dans une cellule déterminée, implique l'acquisition et la réactualisation de l'information spatiale spécifique de chaque mobile et nécessite pour cela une synchronisation des traitements.

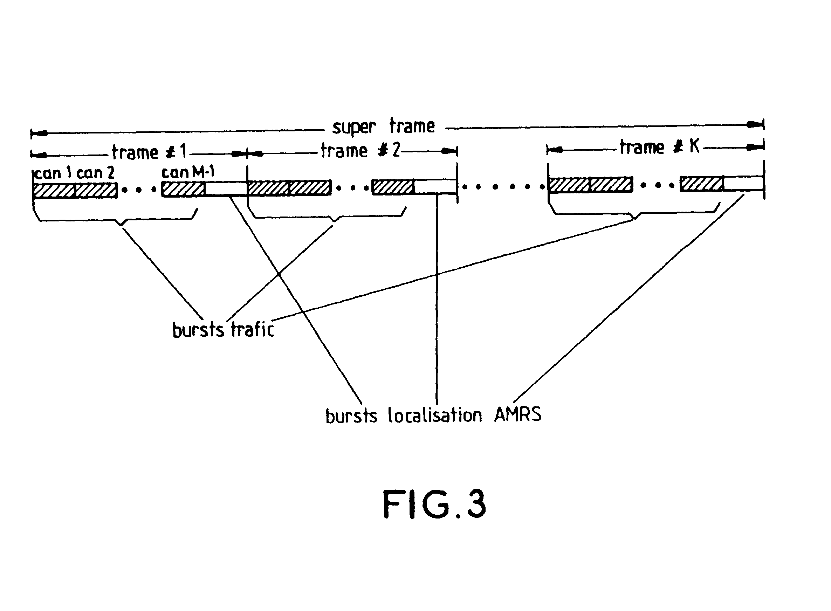

Pour réaliser cette fonction, le procédé selon la première variante à l'invention s'appuie sur une forme d'onde de type AMRT avec une segmentation temporelle du canal : le signal reçu par la station de base, ainsi que le montre la figure 3, est organisé en trames , trame #1 à trame #K, comportant chacune un nombre déterminé M de "bursts". Chaque "burst", classiquement alloué à un utilisateur grâce au multiplexage spatial est partagé par plusieurs communications à l'exception d'un "burst" par trame qui reste alloué spécifiquement à un mobile. Ces "bursts" périodiques dénommés bursts" de localisation AMRS sont donc alloués successivement à tous les canaux spatio-temporels potentiellement utilisables sur le canal fréquentiel (par canal fréquentiel est sous-entendu une paire de fréquences émission/réception).

La structure d'une "supertrame", apparaissant sur la figure 3, correspond à la période de réactualisation de l'information spatiale de tous les canaux spatio-temporels soit un nombre K de trames égal au double du nombre de ces canaux (pour chaque canal spatio-temporel, l'information spatiale est acquise sur deux trames : une pour chacune des fréquences du canal fréquentiel).

Suivant la durée de la "supertrame" en regard de la stationnarité de l'information spatiale, cette méthode doit être adaptée en allouant par exemple plus d'un "burst" par trame à la localisation AMRS pour réduire la période de réactualisation.

Il est évident que le choix du nombre de "bursts" de localisation par trame se répercute directement sur les capacités du système.

La synchronisation des traitements dans ce contexte consiste essentiellement à orienter les "bursts" reçus soit vers la mesure d'information spatiale ("burst" de localisation d'un mobile actif), soit vers le démultiplexage spatial ("burst" de trafic), ou, soit nulle part ("burst" de localisation inutilisé),

et à distribuer ensuite l'information spatiale aux filtres de multiplexage/démultiplexage en émission/réception en fonction des affectations et réaffectations de canaux gérées par le contrôleur AMRS 13.

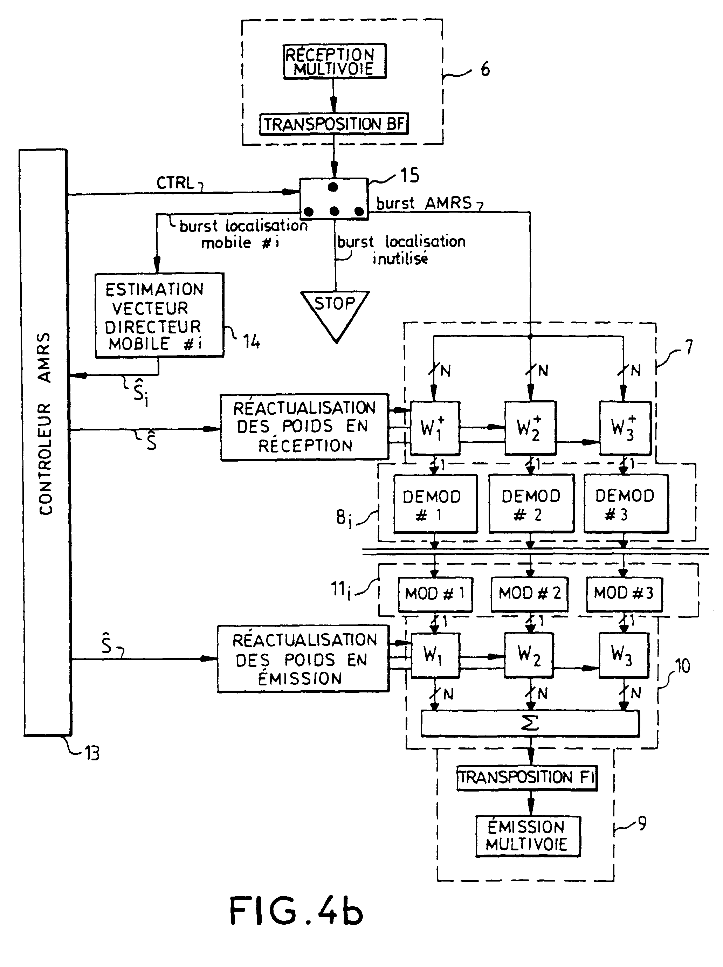

La figure 4b illustre un schéma fonctionnel de l'interface entre le contrôleur AMRS 13, l'estimateur AMRS 14 et les multiplexeur/démultiplexeur spatiaux émission et réception 10 et 7.

L'orientation des "bursts" est effectuée par l'intermédiaire d'un commutateur 15 recevant sur une première entrée le signal reçu du récepteur 6, délimité par une ligne fermée discontinue, après transposition BF. Le commutateur 15 reçoit également sur une deuxième entrée un signal de contrôle CTRL délivré par le contrôleur AMRS 13. Il comporte une première, une deuxième et une troisième sorties correspondant respectivement aux "burst" de localisation d'un mobile actif, au "burst" de trafic et au "burst" de localisation inutilisé (mobile inactif).

La première sortie est couplée à l'entrée de l'estimateur AMRS 14 estimant le vecteur directeur $\hat{S}_i$ de la source i correspondant à un mobile actif i déterminé. Le vecteur directeur estimé $\hat{S}_i$ est injecté au contrôleur AMRS 13. La deuxième sortie est inactive et la troisième sortie est couplée à l'entrée du démultiplexeur spatial 7, délimité par une ligne fermée discontinue, constitué des filtres spatiaux $W_1^+$, $W_2^+$ et $W_3^+$ recevant respectivement le même nombre N de sous-canaux spatiaux contenu dans le "burst" trafic reçu. "+" en exposant correspond à la fonction de transposition conjuguée. Les sorties des filtres spatiaux $W_1^+$, $W_2^+$ et $W_3^+$ sont couplées respectivement à l'entrée des démodulateurs 8i DEMOD #1 à #3, délimités par une ligne fermée discontinue, et délivrent les informations relatives aux mobiles sur le réseau de stations de base représenté sur la figure par deux traits parallèles.

Une réactualisation des poids en réception de chaque coefficient des filtres spatiaux $W_1^+$, $W_2^+$ et $W_3^+$ est réalisée à partir du vecteur directeur $\hat{S}$ estimé par l'estimateur AMRS 14 et après contrôle par le contrôleur AMRS 13.

En émission, les modulateurs 11i, MOD #1 à MOD #3, délimités par une ligne fermée discontinue, reçoivent respectivement des données issues du réseau de stations de base, à émettre en direction des mobiles. Chaque signal modulé est injecté respectivement à l'entrée de chaque filtre spatial $W_1$, $W_2$ et $W_3$ en émission constituant le multiplexeur spatial 10 délimité par une ligne fermée discontinue.

De la même façon qu'en réception, une réactualisation du poids en émission des coefficients des filtres spatiaux $W_1$, $W_2$ et $W_3$ est effectuée à partir du même vecteur directeur $\hat{S}$ estimé par l'estimateur AMRS 14 et contrôlé par le contrôleur AMRS 13. Les sous-canaux sortant respectivement de chaque filtre spatial $W_1$, $W_2$ et $W_3$ sont sommés puis émis après transposition en fréquence intermédiaire $F_I$ dans l'émetteur multivoie 9 délimité par une ligne fermée discontinue.

Le filtre spatial adapté à l'émission vers un mobile déterminé est calculé à partir de son vecteur directeur $\hat{S}$ estimé sur le signal reçu. La nécessité d'éloigner suffisamment les fréquences d'émission et de réception notamment pour autoriser l'utilisation d'une base d'antennes commune pour les deux sens de transmission émission/réception peut rendre inutilisable en émission les vecteurs directeurs des sources estimés sur le signal reçu.

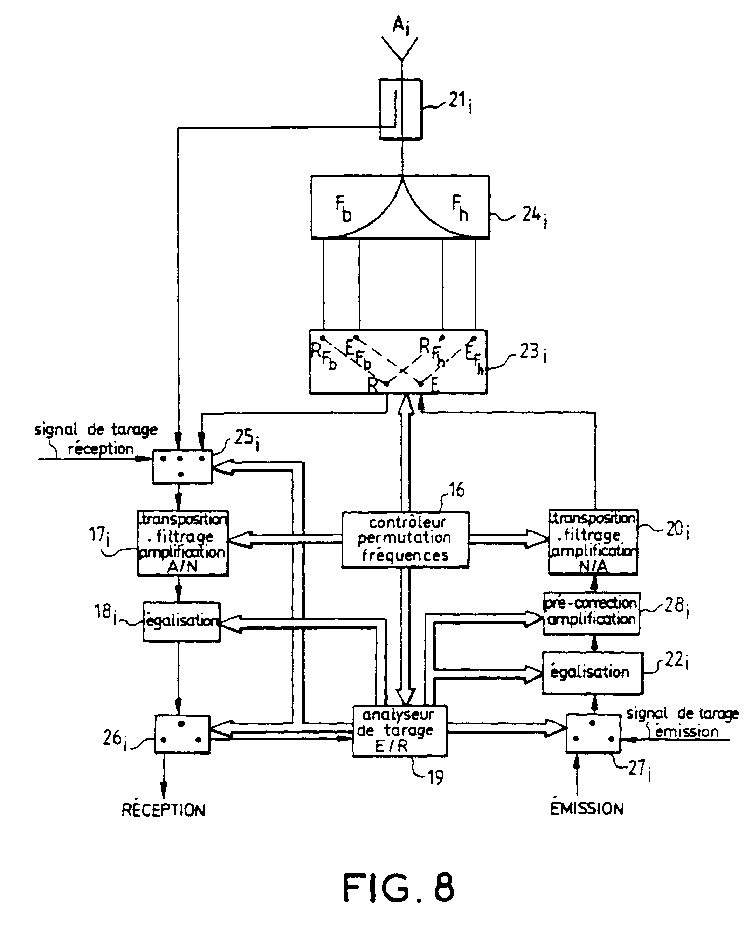

Pour résoudre ce problème, une permutation des fréquences d'un même canal fréquentiel (émission/réception) est opérée par le procédé selon la première variante à l'invention, aboutissant au niveau de la station de base à une permutation globale des sous-bandes allouées aux liaisons montantes et descendantes. Cette permutation réalisée au rythme trame permet l'estimation de l'information spatiale sur la fréquence utilisée en émission avec une trame de décalage par rapport à la réception, ce qui signifie que dans la "supertrame" deux "bursts" de localisation consécutifs sont utilisés pour effectuer une estimation complète de l'information spatiale sur chaque canal spatio-temporel. Un contrôleur de permutation 16 des fréquences est décrit dans la suite de la description en regard de la figure 8.

Avec le multiplexage spatial, chaque canal, classiquement défini comme le support fréquentiel et temporel d'une transmission entre une station de base SB et un mobile, se décompose en sous-canaux spatiaux.

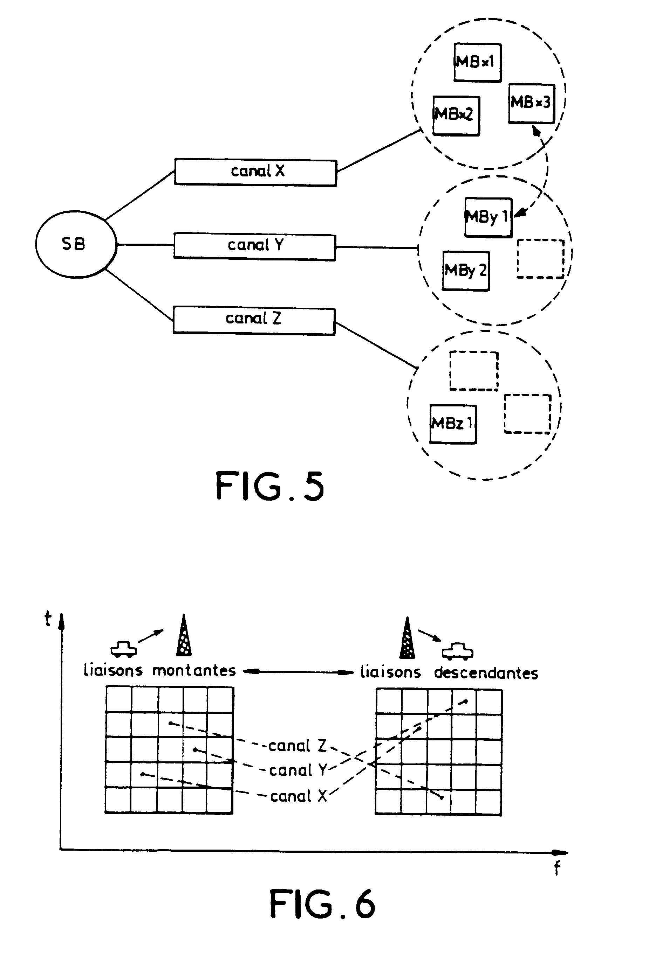

La figure 5 illustre une schématisation de cette décomposition où trois canaux X, Y et Z supportent les transmissions avec respectivement trois mobiles MBx1, MBx2, MBx3, deux mobiles MBy1, MBy2 et un mobile MBz1.

La figure 6 donne une illustration de la notion de canal fréquentiel et temporel pour les canaux X, Y, Z dans le cas de liaisons montantes et dans le cas de liaisons descendantes.

Pour effectuer une affectation de canal, le procédé selon la première variante à l'invention se base sur une table de corrélation spatiale inter-mobile.

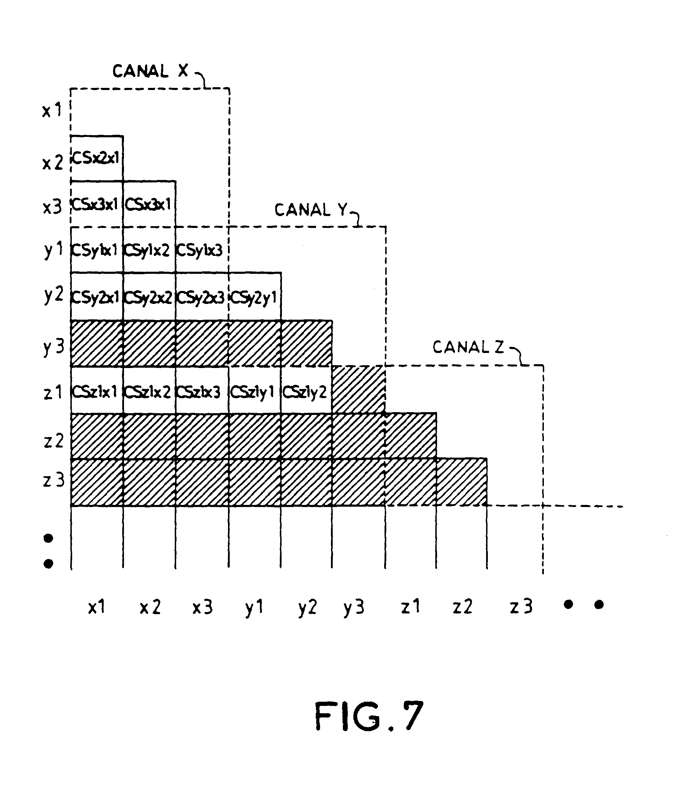

Cette table dont un exemple est présenté sur la figure 7, contient les coefficients de corrélation spatiale CS de chacun des mobiles avec tous les autres à l'intérieur de la flotte gérée par la station de base.

Le coefficient de corrélation spatiale CSij entre deux mobiles i et j est établi à partir de leurs vecteurs directeurs $\hat{a}_{ib}$, $\hat{a}_{jb}$ (estimés sur la fréquence basse $F_b$ du canal) et $\hat{a}_{ih}$, $\hat{a}_{jh}$ (estimés sur la fréquence haute $F_h$ du canal) suivant la formule :

$$CS_{ij} = CS_{ji} = \frac{1}{2}\left( \frac{\left|\hat{a}_{ib}.\hat{a}_{jb}\right|}{\left\|\hat{a}_{ib}\right\|.\left\|\hat{a}_{jb}\right\|} + \frac{\left|\hat{a}_{ih}.\hat{a}_{jh}\right|}{\left\|\hat{a}_{ih}\right\|.\left\|\hat{a}_{jh}\right\|} \right) \qquad (1)$$

En présence de multitrajets c'est le vecteur directeur du trajet le plus puissant associé à la direction d'émission sur la liaison descendante qui représente l'information spatiale représentative du mobile au regard de l'affectation de canal.

Sur la figure 7, les mobiles sont regroupés de façon à faire apparaître l'ensemble des corrélations spatiales à l'intérieur de chaque canal respectivement pour le canal X, le canal Y et le canal Z (zones entourées de pointillés) dont les valeurs sont plus particulièrement prises en compte dans la méthode d'affectation de canal.

Les lignes et colonnes hachurées correspondent à des sous-canaux spatiaux non utilisés.

A chaque nouvelle estimation d'un vecteur directeur relatif à un mobile actif (après l'analyse de chaque "burst" de localisation AMRS), la ligne et la colonne associées de la table sont réactualisées et des tests d'affectation de canal sont appliqués suivant un algorithme d'affectation déterminé.

Son principe en est le suivant : une réactualisation de la répartition des mobiles sur les différents canaux de la cellule est effectuée toutes les deux trames après analyse des deux "bursts" de localisation alloués à chaque mobile successivement sur les deux fréquences du canal duplex.

Si les dernières informations spatiales mesurées sont associées à un mobile entrant dans la cellule, le contrôleur AMRS applique au nouveau mobile p le test d'admission suivant :

pour que le mobile p soit admis sur le canal non saturé Cn, il faut et il suffit que quelque soit le mobile x déjà présent sur l'un des sous-canaux spatiaux de Cn :

$$CS_{xp} < Seuil \qquad (2)$$

si cette condition n'est remplie sur aucun canal non saturé (par rapport à ces capacités potentielles, c'est à dire au nombre maximal de sous-canaux spatiaux) alors le mobile ne peut être pris en charge par la station de base.

Dans le cas contraire, le mobile est admis sur le canal Cn tel que:

$$Max_{x \in C_n}(CS_{px}) = Min_{i=1,2,...,NbCan}\left[Max_{y \in C_i}\left(CS_{py}\right)\right] \quad (3)$$

Si les dernières informations spatiales mesurées sont associées à un mobile p déjà présent sur la cellule, alors le contrôleur AMRS commence par vérifier si le mobile reste suffisamment décorrélés spatialement des autres mobiles présents sur le même canal par application du test suivant :

$$CS_{xp} < Seuil \qquad \text{pour tout mobile x du canal } C_n \qquad (4)$$

si cette condition est remplie, l'affectation des canaux n'est pas modifiée. Dans le cas contraire, le moyen de contrôle AMRS teste la possibilité de permuter les affectations de canaux entre le mobile p et un mobile q sur un canal $C_m$ différent. Pour que cette permutation soit possible, il faut et il suffit que les deux conditions suivantes soient simultanément réalisées :

$$CS_{yp} < Seuil \qquad \text{pour tout mobile y du canal } C_m \qquad (5)$$

$$CS_{qx} < Seuil \qquad \text{pour tout mobile x du canal } C_n \qquad (6)$$

Si aucune permutation n'est possible, le mobile p ne peut plus être pris en charge par la station de base.
Si, et cela doit être le cas le plus fréquent, plusieurs permutations sont possibles le critère de choix optimal proposé est le suivant :
le mobile q retenu pour réaliser la permutation avec le mobile p est celui qui minimise l'expression :

$$\sum_{\substack{x \in C_n \\ x \neq p}} CS_{xp} + \sum_{\substack{x \in C_m \\ y \neq q}} CS_{py} \qquad (7)$$

où $C_m$ désigne le canal affecté au mobile q.
Ainsi que la plupart des techniques de filtrage spatial de signaux multivoies n'utilisant pas de séquence d'apprentissage, la méthode proposée n'est applicable que si les chaînes d'émission et de réception n'introduisent ni déphasage, ni gain différentiels et ni distorsions (non linéarités d'amplification).
Il est très difficile et très coûteux de réaliser un dispositif satisfaisant ces contraintes, c'est pourquoi une méthode est décrite ci-après pour corriger par traitements numériques les dérives et distorsions sur les différentes voies émission et réception.
La correction des déphasages et gain différentiels pour chaque voie formée par chaque antenne de la base d'antennes 4, est réalisée par une procédure de tarage se décomposant en deux étapes. Cette procédure est mise en oeuvre par un dispositif dont un schéma fonctionnel est illustré à la figure 8.
Dans une première étape, le tarage de la chaîne de réception 17i de chaque voie i comportant des moyens de transposition de fréquence, de filtrage, d'amplification et de conversion analogique/numérique, est réalisée par injection en amont de la chaîne de réception 17i d'un signal de tarage, puis adaptation des coefficients d'un filtre d'égalisation 18i couplé à la sortie de la chaîne de réception 17i (sauf la première prise comme référence) permettant de compenser la dispersion des réponses impulsionnelles des différentes voies i, par un analyseur de tarage 19 commun à toutes les voies i formées par la base d'antennes 4.

Dans une deuxième étape, le tarage de la chaîne d'émission 20i de chaque voie i comportant des moyens de conversion numérique/analogique, d'amplification, de filtrage et de transposition de fréquence, est réalisée de façon analogue, en injectant également un signal de tarage en amont de la chaîne d'émission 20i. Une partie du signal émis est réinjectée sur la chaîne de réception 17i, préalablement tarée, via un coupleur résistif 21i. Enfin, un filtre d'égalisation 22i couplé en entrée de la chaîne d'émission 20i est adapté suivant le même principe que celui de la chaîne de réception 17i.

Sur cette figure est également représenté le contrôleur 16 de la permutation des fréquences. Un commutateur deux voies assure l'émission et la réception respectivement à la fréquence basse $F_b$, et la fréquence haute $F_h$ du signal reçu. Ces deux fréquences $F_b$ et $F_h$ étant séparées au moyen d'un duplexeur 24i disposé entre le coupleur résistif 21i et le commutateur deux voies 23i. Le contrôleur 16 de permutation des fréquences $F_b$ et $F_h$ est couplé aux chaînes émission et réception 20i et 17i de chaque voie i, à l'analyseur de tarage 19 et au commutateur deux voies 23i.

Un premier commutateur une voie 25i disposé à l'entrée de la chaîne de réception 17i reçoit sur une première entrée le signal de tarage réception, sur une deuxième entrée le signal prélevé par le coupleur résistif 21i et sur une troisième entrée le signal réception à la fréquence basse $F_b$ ou fréquence haute $F_h$ en fonction de la position du commutateur deux voies 23i.

Un deuxième commutateur une voie 26i est couplé en sortie du filtre d'égalisation de réception 18i et commande le tarage en réception.

Un troisième commutateur une voie 27i, disposé à l'entrée de la chaîne d'émission 20i avant le filtre d'égalisation 22i reçoit sur une première entrée le signal à émettre et sur une deuxième entrée le signal de tarage en émission.

Le signal de tarage utilisé est composé de N raies sinusoïdales équi-espacées dans la bande utile.

Le principe de l'adaptation des p coefficients des filtres d'égalisation 22i et 18i des chaînes d'émission et de réception 20i et 17i est basé sur la minimisation du critère suivant :

$$\left\| m'_i - F.w_i \right\|^2 \tag{8}$$

où $m'_i = \dfrac{H_1}{H_1}$ ($H_i$ réponse fréquentielle de la voie i estimée aux fréquences du signal de tarage),

$F.w_i$ est la réponse fréquentielle du filtre d'égalisation de la voie i, avec F matrice Nxp telle que $F(m, n) = e^{-2.j.\pi.f_m.n}$, et $f_m$ une des fréquences composant le signal de tarage.

La solution au sens des moindres carrés pour le filtre d'égalisation de la voie i est donc :

$$w_i = \left[ F^+.F \right]^{-1} F^+.m'_i \tag{9}$$

La formation de voie en émission ainsi que l'indépendance des sources font que les signaux à émettre en mode AMRS n'ont pas une enveloppe constante et que leur dynamique peut dépasser la plage de linéarité des amplificateurs des chaînes d'émission 20i.

Pour éviter des distorsions désappairées entre voies, un filtre de pré-correction 28i est disposé à l'entrée de la chaîne d'émission 20i et dont les caractéristiques sont les suivantes :

en modélisant les distorsions d'amplitude et de phase d'un amplificateur comme suit :

$$\begin{cases} \rho_{out} = f(\rho_{in}) \\ \theta_{out} = \theta_{in} + g(\rho_{in}) \end{cases} \tag{10}$$

les fonctions de pré-correction f' et g' établies après apprentissage des fonctions f et g sont définies par :

$$\begin{cases} f' = G.f^{-1} \\ g' = -f'og \end{cases} \qquad\qquad (11)$$

où G désigne un éventuel gain fixe de l'ensemble filtre de pré-correction + amplificateur.

La technique mise en oeuvre pour estimer l'information spatiale des sources mobiles est l'une des clés essentielles de cette première variante à l'invention. Cette technique très prometteuse dite de " séparation de sources en aveugle" exploite donc le caractère non gaussien et indépendant des signaux à séparer.

La séparation de sources en aveugle permet de prendre en compte des multitrajets corrélés ou non temporellement dans l'estimation des vecteurs directeurs, ce qui n'est pas le cas des techniques classiquement appliquées en goniométrie haute résolution ni celui des techniques de séparation exploitant la cyclostationnarité.

Les multitrajets corrélés (temporellement) sont intégrés dans un seul vecteur directeur composite tandis que les multitrajets décorrélés sont séparés par la méthode aboutissant à l'estimation d'un vecteur directeur par trajet indépendant.

Il est rappelé que l'algorithme d'estimation de l'information spatiale est appliqué à des signaux en configuration mono-émission (sur les "bursts" de localisation).

Les traitements se décomposent comme suit :

- estimation de l'espace source (associés aux multitrajets décorrélés temporellement),
- blanchiment des signaux sources, et
- estimation des vecteurs directeurs blanchis.

L'estimation de l'espace source est effectué via une décomposition en vecteurs propres, valeurs propres (méthode QR, de Jacobi ou autre) de la matrice Hermitienne de corrélation des observations x(t) :

$$R_x = E\left[x(t).x(t)^+\right] = U.D.U^+ \qquad\qquad (12)$$

où

$$E\left[x(t).x(t)^+\right]$$

correspond à l'espérance mathématique,

avec U matrice des vecteurs propres, et
D matrice diagonale des valeurs propres.

La matrice de corrélation des signaux sources est définie alors par:

$$R_S = U_S.D_S.U_S^+ \qquad\qquad (13)$$

avec $U_S$ matrice des vecteurs propres de l'espace source, et
$D_S$ matrice diagonale des valeurs propres de l'espace source.

L'isolation de l'espace source est opérée par application d'un seuil minimal sur les valeurs propres.

La matrice de blanchiment des sources B s'écrit :

$$B = \left(R_S^{-1}\right)^{+/2} = D_S^{-1/2}.U_S^{+} \qquad (14)$$

Le blanchiment des signaux consiste ensuite simplement à appliquer la matrice de blanchiment au vecteur d'observation, ce qui donne pour les données blanchies la formule suivante :

$$y = B.x = \left(R_S^{-1}\right)^{+/2}.x \qquad (15)$$

La dernière étape consiste à estimer H correspondant à la matrice unitaire des vecteurs directeurs orthonormalisés des sources.

Plusieurs algorithmes existent pour effectuer cette estimation parmi eux est proposé celui de COMON et de CARDOSO-SOULOUMIAC les plus robustes testés, consistant à résoudre le problème d'optimisation suivant :

si on pose

$$z = H_{mc}^{+}.y \qquad (16)$$

COMON propose comme estimateur de H la matrice unitaire $H_{mc}$ minimisant la somme de tous les carrés des modules des cumulants croisés d'ordre 4 de z, ce qui revient à trouver la matrice $H_{mc}$ maximisant le facteur de contraste définit par COMON à savoir:

$$C_{com} = \sum_{i=1}^{M} \left| Cum\left(z_i(t), z_i(t)^*, z_i(t)^*, z_i(t)\right) \right|^2 \qquad (17)$$

(méthode détaillée dans l'article de P. COMON : "Independent Component Analysis - Signal Processing", Vol. 36, N° 3, Special Issue On Higher Order Statistics, pp 287-314, Avril 1994).

CARDOSO et SOULOUMIAC proposent comme estimateur de H la matrice $H_{mc}$ minimisant la somme des carrés des modules des cumulants croisés d'ordre 4 de z ayant des premiers et seconds indices différents, ce qui revient à trouver la matrice $H_{mc}$ maximisant la fonction $C_{car\text{-}sou}$ :

$$C_{car\text{-}sou} = \sum_{i,\,k,\,l=1}^{M} \left| Cum\left(z_i(t), z_i(t)^*, z_k(t)^*, z_l(t)\right) \right|^2 \qquad (18)$$

(méthode détaillée dans l'article de J.F. CARDOSO et A. SOULOUMIAC "Blind Beamforming for Non Gaussian Signals", IEE Proc-F, Vol. 140, N° 6, pp 362-370, Décembre 1993).

L'estimation finale des vecteurs directeurs Â non blanchis utilisés au niveau du filtrage spatial s'obtient simplement par application de la matrice inverse de la matrice de blanchiment :

$$\hat{A} = B^{-1}.\hat{H} = U_S.D_S^{1/2}.\hat{H} \qquad (19)$$

Pour le démultiplexage spatial en réception, le filtrage spatial consiste à optimiser pour chaque mobile le diagramme d'antenne en fonction de son information spatiale, c'est dire en formant des lobes dans la direction des multitrajets du signal mobile visé et des trous dans les directions des autres signaux mobiles. La station de base en mode AMRS applique donc autant de filtres spatiaux qu'il y a de mobiles actifs sur le même canal.

L'application du filtre spatial illustrée à la figure 4b se résume à la formule suivante :

$$y_i(t) = w_i^+ . x(t) \tag{20}$$

où $y_i(t)$ représente le signal filtré spatialement sur lequel la contribution du mobile a été amplifiée et celle des autres mobiles fortement atténuée.

La méthode proposée d'adaptation des coefficients du filtre spatial de réception porte le nom de filtrage adapté spatial estimé, ou FAS estimé, et consiste à réactualiser le filtre spatial adapté au mobile i en fonction de la matrice de corrélation estimée des observations et de l'information spatiale suivant la formule :

$$w_i = \left( \hat{R}_x + \sigma_i^2 Id \right)^{-1} . \hat{a}_i \tag{21}$$

avec:

$w_i$ le vecteur poids adapté à la séparation de la source i,

$$\hat{R}_x = E\left[ x(t).x^+(t) \right] = \frac{1}{n} \sum_{k\,1}^{n} x\left( \frac{k}{Fe} \right) . x^+\left( \frac{k}{Fe} \right), \tag{22}$$

l'estimation de la matrice de corrélation des observations,

$$\hat{a}_i = \sum_{p=1}^{m} \Pi_{im} \hat{a}_{im}, \tag{23}$$

le vecteur directeur composite du mobile i construit par sommation des vecteurs directeurs des multitrajets pondérés par leur puissances relatives,

$\sigma_i^2$, le terme de bruit fictif rajouté pour rendre l'estimation plus robuste vis à vis des risques de réjection du signal utile, liés aux erreurs commises sur $\hat{a}_i$ (le rajout de ce terme de bruit n'est pas crucial pour la méthode de séparation de source en aveugle, puisque les vecteurs sources sont directement et donc précisément estimés à partir des signaux reçus alors que dans le cas de la goniométrie chaque vecteur directeur est déduit d'une estimation de direction d'arrivée via des tables de calibration), et

Id, correspond à la matrice identité.

Pour le multiplexage spatial en émission, le principe du filtrage spatial est de réaliser l'opération réciproque du filtrage spatial en réception, c'est à dire au lieu de séparer des signaux arrivant sur la base d'antennes suivant différents azimuts, il s'agit avec cette même base de générer un signal composite dont chaque composante adressée à un mobile particulier se propage suivant la direction définie par son vecteur directeur principal.

A la différence du filtrage en réception où, pour optimiser le rapport signal sur bruit, il est important de tenir compte de tous les multitrajets d'une même source, en émission il est préférable de ne focaliser l'énergie que dans la direction du multitrajet reçu le plus puissant.

L'application des pondérations aux signaux à émettre issus des différents modulateurs MOD#1 à #3 11i comme illustrée sur la figure 4b, s'écrit comme suit:

$$x = W.m \tag{24}$$

avec:

$m = (m_1(t), m_2(t),..., m_M(t))$ signaux issus des M modulateurs,
$x = (x_1(t), x_2(t),..., x_N(t))$ signaux émis sur les N antennes,
W matrice des vecteurs $w_i$ (i=1 à M).

La méthode d'adaptation des coefficients du filtre spatial en réception est théoriquement applicable en émission, mais en raison des erreurs résiduelles de tarage des voies en émission et en réception, des erreurs dites " de recopie" sont commises qui occasionnent des erreurs de pointage avec un mauvais positionnement des " trous" dans le diagramme de rayonnement et le risque au niveau de la réception par le mobile d'un mauvais rapport Signal/Brouilleur sans possibilité de réjection.

C'est pourquoi, l'adaptation en émission est effectuée suivant une technique légèrement différente dénommée FAS synthétique.

Le calcul de $w_i$, filtre spatial en émission adapté au mobile i, est obtenu en appliquant à son vecteur directeur principal (associé au multitrajet le plus puissant) l'inverse, non plus de la matrice de corrélation estimée des observations sur les N antennes, mais d'une matrice de corrélation synthétique des signaux brouilleurs $R_{Ji}$ :

$$w_i = R_{Ji}^{-1}.\hat{a}_i \qquad\qquad (25)$$

Cette matrice est construite à partir des vecteurs directeurs de deux brouilleurs fictifs positionnés de part et d'autre (en azimut) de chaque brouilleur réel (chaque mobile constituant un brouilleur pour tous les autres). L'intérêt de cette méthode est de permettre une légère erreur sur les vecteurs directeurs des brouilleurs en élargissant les " trous" du diagramme de rayonnement autour de leurs directions estimées.

La matrice de corrélation synthétique utilisée pour l'estimation du vecteur des poids $w_i$ (focalisation en direction du mobile i) s'écrit sous la forme :

$$R_{Ji} = \sum_{j\neq i} \Pi_j . \sum_{\substack{k=-1 \\ k\neq 0}}^{+1} a_{jk}.a_{jk}^+ + \sigma_2^j.\text{Id} \qquad\qquad (26)$$

avec:

$a_{jk}$ représentant les vecteurs directeurs des deux brouilleurs fictifs :

$$a_{jk} = \hat{a}_j(\theta + k.\Delta\theta) \qquad\qquad (27)$$

En l'absence d'information sur l'azimut de la source $\theta$ et sur la variation d'un vecteur directeur avec l'azimut de sa source (sans table de calibration), ces vecteurs sont obtenus par déphasage du vecteur directeur estimé $\hat{a}_j(\theta)$:

$$\hat{a}_{jk} = D_k.\hat{a}_j(\theta) \qquad\qquad (28)$$

avec $D_k$ matrice diagonale de déphasage dont les coefficients diagonaux sont de la forme :

$$d_k(i) = e^{j.k.(i-N).\Delta\varphi} \qquad\qquad (29)$$

où :

$\Delta\varphi$ est un déphasage de l'ordre de quelques degrés à adapter en fonction de la base d'antennes 4,

$\Pi_j$ désigne la puissance de la source j considérée comme brouilleur dans ce cas, ce paramètre est fixé à une valeur proportionnelle à la profondeur du " trou" qu'il est nécessaire de former dans la direction du mobile j sur le diagramme de rayonnement (typiquement 30 dB au dessus du signal utile).

$\sigma_i^2$ est un terme de bruit ajouté pour régler la profondeur du "trou" dans le diagramme de rayonnement, son ajout a également pour conséquence de rendre la matrice $R_{Ji}$ inversible et d'éviter le recours à un calcul coûteux de matrice pseudo-inverse.

Selon la deuxième variante à l'invention un certain nombre d'opérations décrites précédemment, dans la première variante à l'invention, sont réalisées différemment et décrites ci-après. Il s'agit des opérations:

- d'estimation de l'information spatiale relative à chaque mobile qui sont effectuées au moyen de méthodes d'exploitation de séquences connues à priori
- d'isolation et de démodulation du signal reçu de chacun des mobiles en liaison avec la station de base pour permettre le démultiplexage spatial.

Le procédé selon la deuxième variante à l'invention est illustré par la figure 1 comme dans le cas de la première variante à l'invention. Le procédé consiste, à partir d'une émission /réception multivoie 1, à estimer 2 les informations spatiales concernant chaque source mobile active présente dans la cellule aux deux fréquences, supports de l'émission et de la réception alternativement, puis à partir de ces informations à réaliser un multiplexage/démultiplexage global 3 (temporel, fréquentiel et spatial) optimal des communications.

Le principe général de la deuxième variante à l'invention est le suivant : l'information spatiale est estimée pour chaque source mobile présente dans la cellule aux deux fréquences du canal, supports de l'émission et de la réception alternativement, à partir d'un signal reçu. Cette information spatiale est ensuite utilisée pour adapter les coefficients de la structure de filtrage spatial en émission. En ce qui concerne la partie de démultiplexage spatial et de démodulation, plusieurs variantes sont proposées par la deuxième variante à la présente invention :

- une structure de type FAS-DFE (FAS, abréviation pour Filtre Adapté Spatial, et DFE, en terminologie anglo-saxonne pour "Decision Feedback Equalizer"), regroupant un filtre purement spatial (un coefficient complexe par voie) et un organe de décision ;
- une structure de type FAST-BBT-DFE (FAST, abréviation pour "Filtre Adapté Spatio-Temporel" et BBT abréviation pour Bruit Blanc Temporellement, en terminologie anglo-saxonne "Decision Feedback Equalizer"), constituée d'un filtre spatio-temporel associé à un organe de décision indépendant;
- une structure dite FAST-DFE constituée d'un filtre spatio-temporel couplé à un organe de décision.

Alors que la première structure (FAS-DFE) exploite pour s'adapter l'information estimée au préalable, ou bien directement la séquence d'apprentissage, l'adaptation des filtres spatio-temporels mis en oeuvre dans les deux dernières structures (FAST-BBT-DFE et FAST-DFE) utilise directement les séquences d'apprentissage connues de la forme d'onde.

L'information spatiale caractérisant un mobile est définie par les vecteurs directeurs des multitrajets du signal reçu sur la base d'antennes.

Ces vecteurs directeurs représentent la réponse (amplitude et phase) de la base d'antennes à un signal incident suivant un azimut caractéristique de la position de la source.

L'estimation 2 des vecteurs directeurs de chaque source utilise des signaux reçus de la source d'intérêt en configuration mono-émission. Autrement dit dans la forme d'onde, une plage temporelle périodique, appelée par la suite "burst", est allouée à chaque mobile pour la réactualisation de son information spatiale. La méthode appliquée pour cette estimation 2 exploite les séquences connues a priori et fonctionne parfaitement en l'absence de calibration de la base d'antennes. Par contre, compte-tenu de l'écart généralement important entre les fréquences des liaisons montantes (mobiles vers station de base) et descendantes (station de base vers mobiles), l'estimation réalisée sur les signaux reçus et utilisée pour un filtrage spatial en réception n'est pas transposable pour le filtrage spatial en émission. C'est pourquoi, dans le procédé selon la deuxième variante à l'invention une permutation périodique des groupes de fréquences des liaisons montantes et descendantes peut être effectuée de façon à permettre l'apprentissage et la réactualisation de l'information spatiale également aux fréquences d'émission.

La plupart des stations de base gèrent plusieurs canaux temps/fréquence en mode duplex et dans ce contexte le procédé selon la deuxième variante à l'invention peut permettre d'assurer une gestion globale de ces canaux à l'intérieur desquels le multiplexage spatial génère des sous-canaux AMRS de façon à regrouper préférentiellement sur un même canal temps/fréquence les mobiles les plus décorrélés spatialement.

Pour chaque mobile, l'information spatiale estimée comporte un ou plusieurs vecteurs directeurs associés aux différents trajets détectés ainsi que la puissance relative de chacun des trajets. A partir de ces données concernant l'ensemble des mobiles dont les transmissions sont multiplexées ensemble, un filtre spatial est calculé en émission pour chaque liaison avec comme contrainte de focaliser le diagramme de rayonnement en direction du trajet principal du signal utile et au contraire de trouer le diagramme de rayonnement en direction du trajet principal de chacun des signaux brouilleurs (dus aux transmissions avec les autres mobiles). Les signaux sont formés par sommation voie par voie des sorties des filtres de multiplexage spatial.

Suivant les variantes mises en oeuvre à la deuxième variante à l'invention, l'ensemble démultiplexage spatial/démodulation permet:

- FAS-DFE : de prendre en compte le trajet utile principal et de réjecter les principaux trajets brouilleurs et les autres trajets utiles décorrélés spatialement avec le trajet principal dans la limite des capacités de la structure (une structure de N capteurs, peut réjecter N-1 signaux décorrélés spatialement avec le signal utile),
- FAST-BBT-DFE : de remettre en phase l'énergie de l'ensemble des trajets du signal utile et de réjecter de façon sous-optimale les signaux brouilleurs multitrajet. Alors que ce procédé apporte un gain en terme de rapport signal sur bruit sur le symbole courant par rapport au FAS-DFE, il présente les mêmes capacités de réjection des signaux brouilleurs à la différence près que les multitrajets utiles autres que le trajet principal ne sont plus assimilés à des signaux brouilleurs, ce qui libère autant de degrés de liberté pour prendre en compte d'autres brouilleurs,
- FAST-DFE : de traiter de façon quasi-optimale un signal multicapteur brouillé en réalisant non seulement la remise en phase des multitrajets du signal utile mais aussi celle des multitrajets des signaux brouilleurs avant leur réjection. Ce procédé permet pour éliminer une source brouilleur de n'utiliser qu'un seul degré de liberté spatiale quelque soit le nombre de multitrajets suivant lesquels cette source est reçue au niveau du réseau multicapteur.

De plus, le procédé selon la deuxième variante à l'invention réactualise les coefficients des filtres spatiaux en réception et en émission, réalisant respectivement un démultiplexage spatial et un multiplexage spatial en prenant en compte les défauts d'appairage, conséquence d'erreurs résiduelles de tarage des voies en émission et en réception.

Un dispositif pour la mise en oeuvre du procédé selon la deuxième variante à l'invention est schématisé par la figure 2, comme dans le cas de la première variante à l'invention, et comporte les mêmes sous-ensembles. Cependant une différence existe dans la description de la deuxième variante en ce que le démultiplexeur spatial 7 comporte un nombre déterminé de filtres spatiaux ou spatio-temporels, couplé à un nombre déterminé de démodulateurs 8i égal au nombre maximal de canaux spatiaux fixé par canal fréquentiel, par exemple trois démodulateurs pour une base comportant dix antennes.

La deuxième variante utilise la même notion de "supertrame" illustrée à la figure 3 et préalablement décrite.

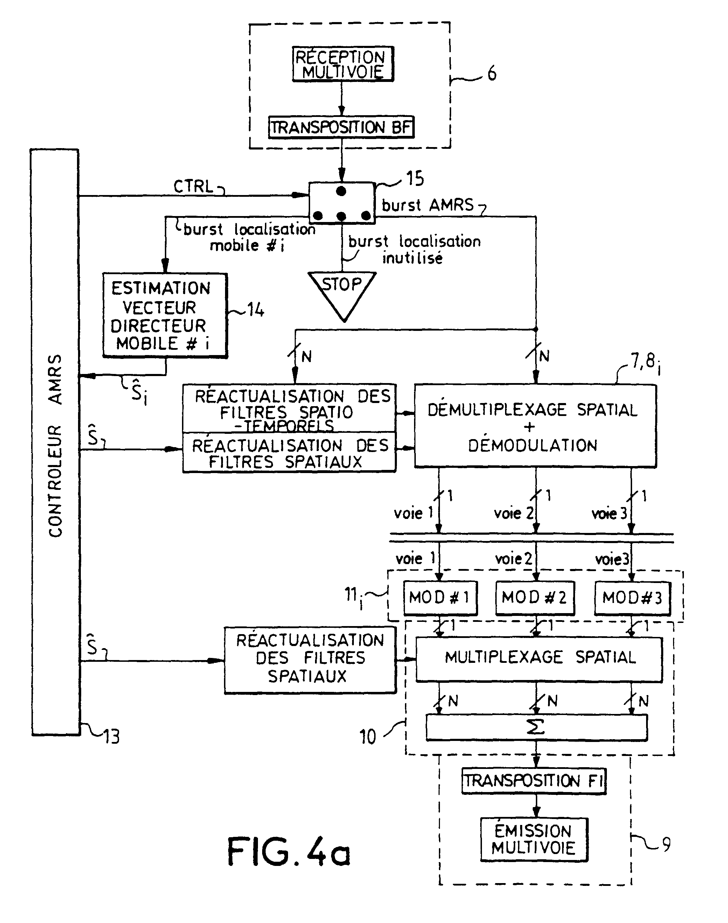

L'interface entre le contrôleur AMRS 13, l'estimateur AMRS 14 et les multiplexeur/démultiplexeur spatiaux émission et réception 10 et 7 est illustré, non pas par la figure 4b, mais par la figure 4a.

Suivant cette figure 4a, l'orientation des "bursts" est effectuée par l'intermédiaire d'un commutateur 15 recevant sur une première entrée le signal reçu du récepteur 6 délimité par une ligne fermée discontinue, après transposition BF. Le commutateur 15 reçoit également sur une deuxième entrée un signal de contrôle CTRL délivré par la contrôleur AMRS 13. Il comporte une première, une deuxième et une troisième sorties correspondant respectivement aux "burst" de localisation d'un mobile actif, au "burst" de trafic et au "burst" de localisation inutilisé (mobile inactif).

La première sortie est couplée à l'entrée de l'estimateur AMRS 14 estimant le vecteur directeur Si de la source i correspondant à un mobile actif i déterminé. La vecteur directeur estimé $\hat{S}_i$ est injectée au contrôleur AMRS 13. La deuxième sortie est inactive et la troisième sortie est couplée à l'entrée du démultiplexeur spatial/démodulateurs 7 et 8i. La troisième sortie est également utilisée pour la réactualisation des filtres spatio-temporels. Le démultiplexeur/démodulateur 7 et 8i comporte N filtres spatiaux ou spatio-temporels non représentés, recevant respectivement le même nombre N de sous-canaux spatiaux contenu dans le "burst" trafic reçu. Les sorties des filtres spatiaux ou spatio-temporels sont couplées respectivement à l'entrée des démodulateurs 8i, et délivrent les données relatives aux mobiles sur le réseau de stations de base représenté sur la figure par deux traits parallèles.

Une réactualisation des poids en réception de chaque coefficient des filtres spatiaux ou spatio-temporels est réalisée à partir du vecteur directeur S estimé par l'estimateur AMRS 14 et après contrôle par le contrôleur AMRS 13.

En émission, des modulateurs 11i MOD #1 à MOD #3, délimités par une ligne fermée discontinue, reçoivent respectivement des données reçues du réseau de stations de base, à émettre en direction des mobiles. Chaque information modulée est injectée respectivement à l'entrée de chaque filtre spatial en émission, non représenté, du multiplexeur spatial 10 délimité par une ligne fermée discontinue.

De la même façon qu'en réception, une réactualisation du poids en émission des coefficients des filtres spatiaux est effectué à partir du même vecteur directeur S estimé par l'estimateur AMRS 14 et contrôlé par le contrôleur AMRS 13. Les sous-canaux sortant respectivement de chaque filtre spatial sont sommés puis émis après transposition en fréquence intermédiaire $F_I$ dans l'émetteur multivoie 9 délimité par une ligne fermée discontinue.

Le filtre spatial adapté à l'émission vers un mobile est calculé à partir de son vecteur directeur $\hat{S}$ estimé sur le signal reçu. La nécessité d'éloigner suffisamment les fréquences d'émission et de réception notamment pour autoriser l'utilisation d'une base d'antennes commune pour les deux sens de transmission émission/réception peut rendre inutilisable en émission les vecteurs directeurs des sources estimés sur le signal reçu.

Pour résoudre ce problème, une permutation des fréquences d'un même canal fréquentiel (émission/réception) est opérée par le procédé selon la deuxième variante à l'invention, aboutissant au niveau de la station de base à une permutation globale des sous-bandes allouées aux liaisons montantes et descendantes. Cette permutation réalisée au rythme trame permet l'estimation de l'information spatiale sur la fréquence utilisée en émission avec une trame de décalage par rapport à la réception ce qui signifie que dans la "supertrame" deux "bursts" de localisation consécutifs sont utilisés pour effectuer une estimation complète de l'information spatiale sur chaque canal spatio-temporel. Un contrôleur de permutation 16 des fréquences contrôle la permutation de fréquences comme décrit précédemment en regard de la figure 8.

Avec le multiplexage spatial, chaque canal, classiquement défini comme le support fréquentiel et temporel d'une transmission entre une station de base SB et un mobile, se décompose en sous-canaux spatiaux.

La figure 5 illustre une schématisation de cette décomposition selon la deuxième variante à l'invention de la même manière que selon la première variante à l'invention.

La figure 6 donne une illustration de la notion de canal fréquentiel et temporel selon la deuxième variante à l'invention de la même manière que selon la première variante à l'invention.

Pour effectuer une affectation de canal, le procédé selon la deuxième variante à l'invention se base sur une table de corrélation spatiale inter-mobile dont un exemple est présenté sur la figure 7 de la même manière que selon la première variante à l'invention.

La figure 8 fournit un schéma fonctionnel d'un module de commutation et de tarage du dispositif pour la mise en oeuvre du procédé selon la deuxième variante à l'invention. La description de la figure 8 est la même que celle effectuée pour la première variante à l'invention.

Un dispositif pour la mise en oeuvre du procédé selon la deuxième variante à l'invention, schématisé par la figure 2, met en oeuvre un procédé de synchronisation spécifique à cette variante.

La synchronisation du récepteur sur l'une des voies de transmissions pendant les phases de trafic (bursts de trafic AMRS) est réalisée en environnement brouillé (tous les mobiles partageant le même canal temps/fréquence émettant simultanément pendant les bursts de trafic).

Ces conditions de réception imposent la mise en oeuvre d'un procédé de synchronisation plus performant que la synchronisation monocapteur classique (détecteur à seuil en sortie de filtrage adapté à la séquence d'apprentissage) inefficace dans ce contexte.

Le procédé de synchronisation selon la deuxième variante à l'invention a fait l'objet d'un brevet français déposé par la Demanderesse et publié sous le n° 2 715 588, intitulé : "Procédé et dispositif permettant à un modem de se synchroniser sur un transmetteur de données numériques par voie hertzienne en présence de brouilleur". Il est mis en oeuvre par un détecteur multicapteur optimal dans les conditions suivantes :

-   bruit total (bruit de fond + brouilleurs) gaussien,
-   bruit total circulaire (invariant par rotation),
-   bruit total blanc temporellement (constant dans la bande, pas de multitrajet).

Ce détecteur a pour objet à chaque échantillon la prise de décision entre deux hypothèses :

$$H0 : \qquad x(t) = b(t) \qquad \text{(bruit seul)}$$

$$H1: \qquad x(t) = d(t - \tau_0) * c(t) + b(t) \qquad \text{(bruit + signal)} \tag{30}$$

avec $c(t)$ désignant le canal multivoie support de la transmission, $d(t)$ le signal émis et $b(t)$ le bruit total de matrice de corrélation R.

Le détecteur optimal au sens de la maximisation de la probabilité de détection pour une probabilité de fausse alarme déterminée correspond au rapport de vraisemblances sous H1 et H0 sur l'intervalle de temps $[n_0 T_e, (n_0 + K_e) T_e]$ ($T_e$ période d'échantillonnage) soit :

$$\Lambda(x(n_0+k)), \ 1 \leq k \leq K_e = \frac{p(x(n_0+k), \ 1 \leq k \leq K_e / H1)}{p(x(n_0+k), \ 1 \leq k \leq K_e / H0)} \tag{31}$$

où $p(x/H0)$, $p(x/H1)$ désignent respectivement la densité de probabilité de l'observation sous H0, et H1.

Le développement de cette expression analytique, sous les hypothèses définies plus haut concernant le bruit total, conduit à l'expression, fonction de x, c, b et R, suivante :

$$\hat{\Lambda}(x) = \left(\frac{\det(\hat{R}_0)}{\det(\hat{R}_1)}\right)^{K_e} \frac{e^{-\sum\limits_{k=1}^{K_e}[x(n_0+k)-d(k)C]^+ R_1^{-1}[x(n_0+k)-d(k)C]}}{e^{-\sum\limits_{k=1}^{K_e}[x(n_0+k)]^+ R_0^{-1}[x(n_0+k)]}}$$

(32)

Une statistique suffisante pour résoudre le problème posé consiste à soumettre à un seuil déterminé l'estimation suivante:

$$\frac{\hat{r}_{xd}(n_0)^+ \hat{R}_x^{-1}(n_0)\, \hat{r}_{xd}(n_0)}{\dfrac{1}{K_e}\sum\limits_{k=1}^{K_e}|d_k|^2} \begin{matrix}\langle\\\rangle\end{matrix} \eta \qquad (33)$$

avec:

$$\hat{R}_x(n_0) = \frac{1}{K_e}\sum\limits_{k=1}^{K_e} x(k+n_0)\, x(k+n_0)^+, \text{ et} \qquad (34)$$

$$\hat{r}_{xd}(n_0) = \frac{1}{K_e}\sum\limits_{k=1}^{K_e} x(k+n_0)\, d(k)^* \qquad (35)$$

L'information spatiale caractérisant la position de chaque mobile constitue un paramètre indispensable à l'adaptation des filtres de formation de voie en émission. Celle-ci est donc définie pour chacun des mobiles par le vecteur source associé à l'arrivée principale d'énergie sur la base d'antennes.

Cette information est estimée sur des "bursts" alloués spécifiquement et successivement à chaque mobile et donc en configuration mono-émission (non brouillée).

Pour la plupart des systèmes de radiocommunication cellulaire les modèles standard de canaux définissant des conditions de propagation "type" font état d'une réponse impulsionnelle discrète correspondant à un certain nombre de trajets. Par conséquent, pour l'estimation de l'information spatiale, la modélisation du signal reçu par la base d'antennes est la suivante :

$$x(t) = \sum\limits_{i=1}^{P} m(t - t_i)\, a_i + b(t) \qquad (36)$$

où :

$x(t) = [x_1(t), x_2(t),..., x_N(t)]^T$, désigne le signal observé par la base d'antennes,
"T" en exposant définit l'opération de transposition,
$m(t)$, désigne le signal émis,

P, désigne le nombre de trajets discrets et décorrélés temporellement représentant la réponse impulsionnelle du canal,

$a_i$, désigne le vecteur directeur associé au trajet #i, plus précisément $a_i$ intègre le produit de deux composantes :

- la réponse de la base d'antennes à un front d'onde incident d'azimut $\theta$ et de site $\varphi$ (vecteur à N coefficients complexes),
- la réponse du canal au retard $t_i$ associée au trajet #i (coefficient complexe),

(les vecteurs sources étant définis à un coefficient complexe près, dans la suite de la description les deux composantes sont le plus souvent confondues dans la notion de vecteur source),

$b(t)=[b_1(t),b_2(t),..., b_N(t)]^T$, désigne la composante de bruit blanc gaussien sur les N capteurs. Le principe de l'estimation des vecteurs sources consiste à extraire les sorties d'un module de synchronisation trame multicapteur. Ce module est constitué de N corrélateurs monocapteur réalisant sur chaque voie un filtrage adapté à la séquence d'apprentissage. En notation matricielle ce traitement s'écrit :

$$y(t) = x(t) * d^*(-t) \tag{37}$$

soit pour un signal échantillonné :

$$y(n) = \hat{r}_{xd}(n) = \frac{1}{L} \sum_{k=1}^{L} x(n+k)\, d^*(k) \tag{38}$$

avec

$$y(k) = \left[ y_1\!\left(\frac{k}{F_e}\right),\, y_2\!\left(\frac{k}{F_e}\right),\, ...,\, y_N\!\left(\frac{k}{F_e}\right) \right],$$

le vecteur constitué des N sorties des corrélateurs,

$d = [d(0), d(1),..., d(L-1),d(L-2)]$, la séquence d'apprentissage, et

$x(t) = (x_1(t), x_2(t),..., x_N(t)]$, le signal observé sur les N capteurs.

Le vecteur directeur du trajet principal du signal utile est donc estimé par la sortie des N corrélateurs à l'instant de synchronisation trame (maximum de l'estimateur de la fonction de détection multicapteur), soit :

$$\hat{a}_i = y(t_i) \tag{39}$$

avec $t_i = \frac{k_i}{F_e}$ retard du trajet (composite ou pas) #i correspondant au pic principal détecté sur la fonction de détection mise en oeuvre par le processus de synchronisation multicapteur.

Il existe d'autres alternatives possibles à cette méthode d'estimation de l'information spatiale qui sont compatibles du procédé objet de la deuxième variante à la présente invention, à savoir:

- estimation par séparation de sources en aveugle aux ordres supérieurs avec un domaine d'application limité aux signaux non gaussiens,
- goniométrie haute résolution (avec comme contrainte supplémentaire de disposer d'une base d'antennes calibrée).

L'étape de démultiplexage/démodulation en réception du procédé selon la deuxième variante à l'invention est différente de l'étape de démultiplexage/démodulation en réception du procédé selon la première variante à l'invention et consiste, au moyen d'une base d'antennes couplée à un récepteur multivoie et d'une unité de traitement numérique du signal, à séparer puis démoduler les différentes composantes du signal reçu, associées aux stations mobiles émettant simultanément et sur la même fréquence vers la station de base.

Plusieurs méthodes permettant un démultiplexage suivi d'une démodulation en réception selon la deuxième variante à l'invention sont décrites ci-après ainsi qu'une structure de filtre adaptée à chaque méthode.

Ces méthodes peuvent être mises en oeuvre à partir de deux types de filtrage : un filtrage spatial ou un filtrage spatio-temporel.

Elles mettent toutes en oeuvre deux traitements numériques consécutifs identiques, à savoir :

- un filtrage spatial ou spatio-temporel multivoie réalisant la séparation des différentes composantes du signal associées aux différents mobiles actifs et l'optimisation du rapport signal/bruit sur le symbole courant, et
- une égalisation/démodulation monovoie réalisant la suppression des interférences intersymboles et la prise de décision.

Elles ont en commun le fait qu'elles exploitent la connaissance a priori de séquences d'apprentissage contenues dans les trames du signal émis pour adapter les coefficients des filtres mis en oeuvre.

Trois structures permettant la mise en oeuvre de ces méthodes, déjà introduites précédemment, et qui sont rappelées ci-après.

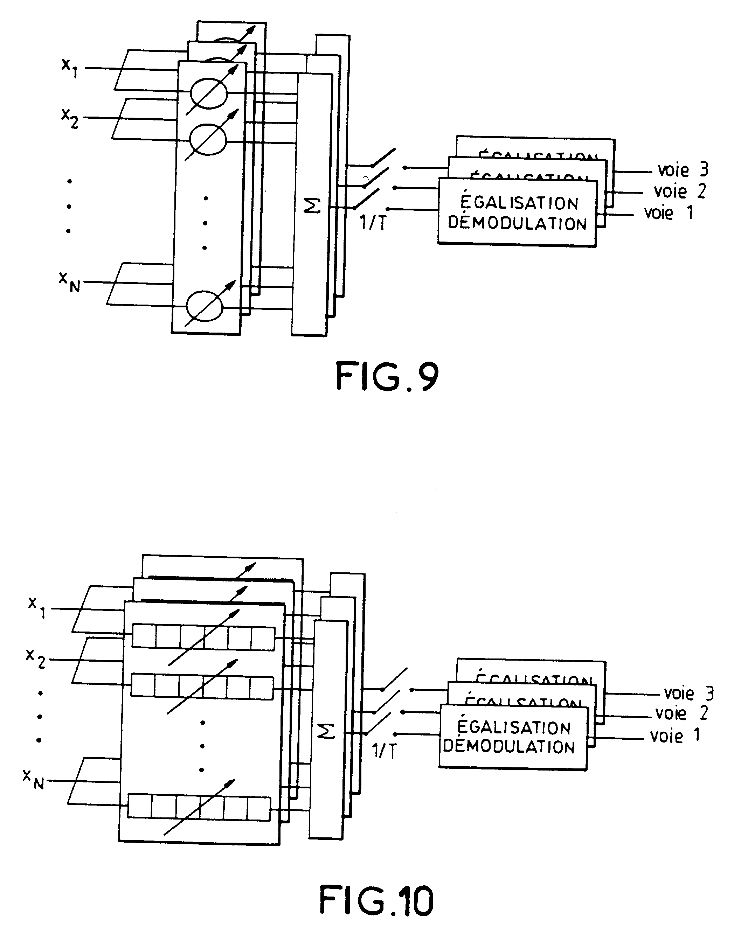

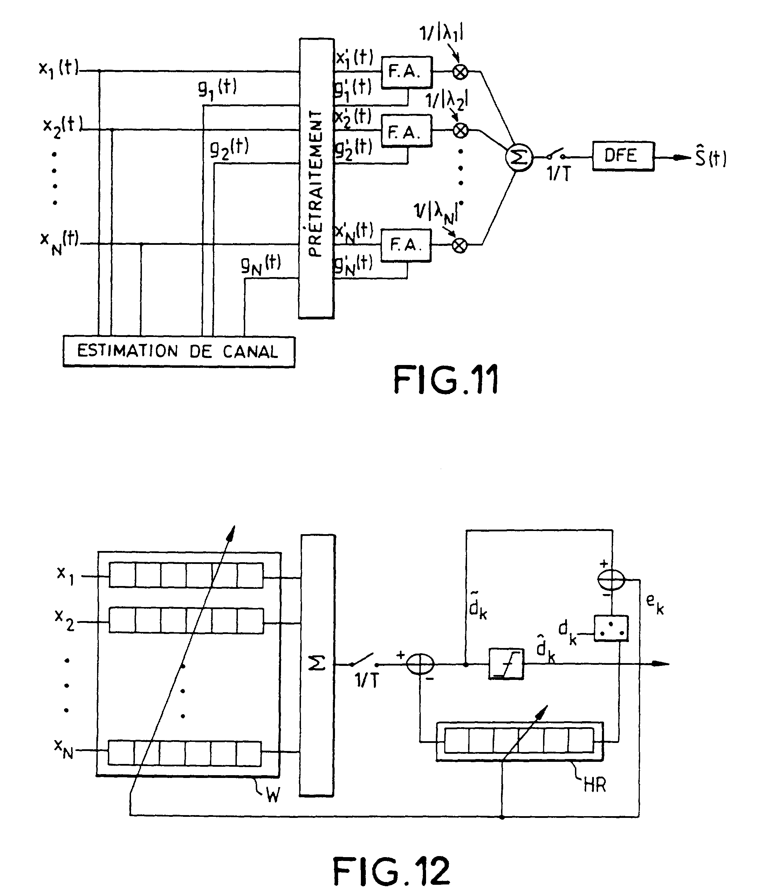

- Une première structure FAS-DFE, illustrée à la figure 9, s'applique au filtrage spatial associé à un module d'égalisation/démodulation de type DFE, englobant deux variantes :
- FAS "estimé"-DFE, avec adaptation du filtre spatial sur le vecteur directeur de la source d'intérêt, et
- FAS "réplique"-DFE, avec adaptation du filtre spatial directement sur la séquence de référence (réplique).
- une deuxième et une troisième structures, dont une structure générale est illustrée à la figure 10, s'appliquent au filtrage spatio-temporel associé à un module d'égalisation/démodulation de type DFE et comportent respectivement :
- un FAST-BBT-DFE, illustré à la figure 11, à structure découplée, réalisant les traitements d'antibrouillage et d'égalisation/démodulation, et dont la mise en oeuvre est optimale en présence de bruit total (bruit de fond plus brouilleur) blanc temporellement, et
- un FAST-DFE, illustré à la figure 12, réalisant de façon conjointe le traitement de filtrage spatial et la fonction d'égalisation/démodulation.

Ces différentes méthodes et structures pour leur mise en oeuvre sont décrites en détail ci-après.

Concernant le FAS-DFE, le filtrage purement spatial consiste à optimiser pour chaque mobile le diagramme d'antenne en fonction de son information spatiale directement à partir de la séquence de référence du signal utile, c'est-à-dire en formant des lobes dans la direction des multitrajets du signal mobile visé et des trous dans les directions des autres signaux mobiles. La station de base en mode AMRS applique donc autant de filtres spatiaux qu'il y a de mobiles actifs sur le même canal.

L'application du filtre spatial illustrée à la figure 9 se résume à la formule suivante :

$$y_i(t) = w_i^+ . x(t) \tag{40}$$

où $y_i(t)$ représente le signal filtré spatialement sur lequel la contribution du mobile a été amplifiée et celle des autres mobiles fortement atténuée.

Cette méthode de filtrage permet de réjecter N-1 sources de brouillage (les multitrajets décorrélés issus d'un même brouilleur sont autant de sources de brouillage à prendre en compte). En présence de multitrajets du signal utile, cette méthode n'est pas optimale car elle ne permet pas de remettre en phase des trajets sur les différentes voies avant leur sommation. En contrepartie, sa mise en oeuvre ne nécessite pas de grande capacité de traitement.

Les deux variantes proposées d'adaptation des coefficients du filtre spatial de réception portent le nom de filtrage adapté spatial "estimé" ou FAS "estimé", et de filtrage adapté spatial "réplique" consistent à réactualiser le filtre spatial pour isoler le signal du mobile i, suivant la formule :

- Pour le FAS "estimé" :

$$w_i = \left( \hat{R}_x + \sigma_i^2 I \right)^{-1} . \hat{a}_i \tag{41}$$

- Pour le FAS "réplique" :

$$w_i = \left( \hat{R}_x + \sigma_i^2 I \right)^{-1} . \hat{r}_{xd} \qquad (42)$$

avec:

$w_i$, le vecteur poids adapté à la séparation de la source i,

$$\hat{R}_X = E\left[ x(t).x^+(t) \right] = \frac{1}{n} \sum_{k=1}^{n} x\left( \frac{k}{Fe} \right) . x^+\left( \frac{k}{Fe} \right), \qquad (43)$$

l'estimation de la matrice de corrélation des observations,

$$\hat{a}_i = \sum_{p=1}^{m} \Pi_{im} \hat{a}_{im}, \qquad (44)$$

le vecteur directeur composite du mobile i construit par sommation des vecteurs directeurs des multitrajets pondérés par leur puissances relatives,

$\sigma_i^2$, le terme de bruit fictif rajouté pour rendre l'estimation plus robuste vis à vis des risques de réjection du signal utile, liés aux erreurs commises sur $\hat{a}_i$ (le rajout de ce terme de bruit n'est pas crucial pour la méthode de séparation de source en aveugle, puisque les vecteurs sources sont directement et donc précisément estimés à partir des signaux reçus alors que dans le cas de la goniométrie chaque vecteur directeur est déduit d'une estimation de direction d'arrivée via des tables de calibration), et

$$\hat{r}_{xd}(n) = \frac{1}{L} \sum_{k=1}^{L} x(n+k) \, d^*(k) \qquad (45)$$

Concernant la deuxième structure relative à la mise en oeuvre de la méthode FAST-BBT-DFE, le problème général de l'adaptation sur réplique d'une structure de filtrage spatio-temporelle pour un signal multicapteur se définit de façon théorique comme suit :

soit le signal reçu modélisé par

$$x(t) = G(t) * (t) + b(t) \qquad (46)$$

où : $x(t) = [x_1(t), x_2(t),..., x_N(t)]^T$ désigne le signal reçu sur la base d'antennes,
$G(t) = (g_1(t), g_2(t),..., g_N(t))^T$, la modélisation du canal sur les N capteurs,
$s(t)$ le signal émis, et
$b(t) = [b_1(t), b_2(t),..., b_N(t)]^T$, la composante bruit+brouilleur sur les N capteurs.

Le problème posé consiste à estimer les coefficients du filtre W de la structure spatio-temporelle réalisant un filtrage adapté optimal au signal multicapteur.

La formulation théorique de ce filtre est la suivante :

$$W(t) = R_b^{-1}(t) * G(t) \qquad (47)$$

avec

$$R_b(t) = E\left[b(t_0), b^+(t_0 - t)\right]$$

matrice de corrélation de la composante bruit+brouilleur.

L'estimation de cette expression n'est pas simple dans le cas général aussi la première méthode d'adaptation proposée (FAST-BBT) se place dans l'hypothèse restrictive d'un bruit blanc temporellement ce qui se traduit essentiellement concernant les signaux brouilleurs par les hypothèses suivantes :

- les signaux brouilleurs sont large bande ($\geq$ bande du signal utile),
- les signaux brouilleurs sont monotrajet.

Le problème à résoudre est ainsi simplifié par la forme que prend la matrice de corrélation $R_b$.

$R_b(t) = R_b\delta(t)$ avec $R_b$ constante. ($\delta(t)$ correspond à la fonction de Dirac)

Si le domaine fréquentiel est pris en compte W s'écrit :

$$W(f) = R_b^{-1}\, G(f) \tag{48}$$

$R_b$ ne dépend plus de f et le problème se réduit aux estimations séparées de G et de $R_b$.

L'estimation du canal G consiste en N estimations indépendantes de canal sur signal monocapteur.

Soit g l'un des canaux à estimer, la modélisation monocapteur du signal reçu associé x(t) à l'instant de synchronisation trame et échantillonné deux fois par symbole est la suivante :

$$x(k) = g^T\, s(k) + b(k) \tag{49}$$

où :

$$s(k) = \left[s(kT_e), s\big((k-1)\,T_e\big), \ldots, s\big(k - (L-1)\,T_e\big)\right]$$

désigne les échantillons de la séquence d'apprentissage connue ou réplique, et

b(k), l'échantillon de la composante bruit+brouilleur.

Cette équation dont l'inconnue est g se résout généralement par des méthodes minimisant l'erreur quadratique moyenne EQM définie par:

$$\xi = E\left[\left\|x(k) - h^+\, s(k)\right\|^2\right] \qquad \text{avec } g = h^\star \tag{50}$$

et dont la solution théorique est définie par:

$$h = R_{ss}^{-1}\, r_{sx} \tag{51}$$

avec

$$R_{ss} = E\left[s(t)\, s^+(t)\right]$$

dont une estimation non biaisée est donnée par :

$$\hat{R}_{ss} = \frac{1}{(M-L)} \sum_{n=L+1}^{M} s(k)\, s(k)^+ \qquad (52)$$

et

$$r_{sx} = E\left[ s(t)\, x^{*}(t) \right]$$

dont une estimation non biaisée est donnée par:

$$\hat{r}_{sx} = \frac{1}{(M-L)} \sum_{n=L+1}^{M} s(k)\, x^{*}(k) \qquad (53)$$

En pratique, Rss dépendant exclusivement de la séquence d'apprentissage connue a priori, la matrice $R_{ss}^{-1}$ peut être précalculée.

L'estimation de la matrice de corrélation de la composante bruit+brouilleur $R_b$ s'appuie sur la connaissance de la séquence d'apprentissage et du canal sur les N capteurs (matrice G).

A partir de la modélisation précédente du signal multicapteur se déduit l'expression de l'estimation de la composante bruit+brouilleur sur la voie n suivante :

$$b_n(t) = x_n(t) - g_n(t) * s(t) \qquad (54)$$

d'où l'expression de l'estimation de la matrice de corrélation $R_b$ :

$$\hat{R}_b = \frac{1}{M} \sum_{k=1}^{M} b\left(t_0 + kT_e\right) b^+\left(t_0 + kT_e\right) \qquad (55)$$

Plusieurs choix sont possibles pour estimer W notamment pour estimer l'inverse de $R_b$. Parmi eux est proposée une méthode basée sur la décomposition en vecteurs propres/valeurs propres de $R_b$, à savoir:

$$R_b = U\, D\, U^+ \qquad (56)$$

avec U, matrice des vecteurs propres orthonormés et D matrice diagonale des valeurs propres $\lambda_i$.

Après cette décomposition, l'expression de W dans le domaine fréquentiel devient :

$$W(f) = UD^{-1}U^+G(f) \qquad (57)$$

Cette décomposition de W permet d'identifier les différentes étapes de traitements intervenant dans la structure de filtrage représentée sur la figure 11.

L'expression du signal filtré dans le domaine temporel devient donc:

$$y(t) = W^+(-t)\, x(t) \qquad (58)$$

avec

$$W^+(-t) = G^+(-t)\, U^+ D^{-1} U \qquad (59)$$

La méthode FAST-BBT-DFE qui vient d'être décrite se résume donc à un filtrage adapté sur chaque voie non pas sur le signal reçu directement mais après un prétraitement de blanchiment spatial de sa composante : bruit de fond+brouilleur ; en bout de chaîne de traitement les voies ainsi constituées sont sommées après pondération de chaque voie par un coefficient inversement proportionnel au module de la valeur propre de la matrice de corrélation de la composante bruit+brouilleur associée.

Les traitements se décomposent séquentiellement comme suit :

- estimation de canal sur signaux brouillés sur chaque voie,
- estimation de la matrice de corrélation de la composante bruit+brouilleur $R_b$,
- estimation de la matrice de prétraitement (matrice des vecteurs propres de la matrice de corrélation $R_b$),
- prétraitement : projection du signal reçu et des réponses impulsionnelles des canaux estimés sur la base des vecteurs propres,
- filtrage adapté aux canaux projetés sur chaque voie pour le remise en phase des multitrajets éventuels,
- combinaisons des différentes voies, chacune étant affectée d'un poids inversement proportionnel au module de la valeur propre correspondante de façon à ce que les composantes correspondant aux brouilleurs (valeurs propres maximales) soient prises en compte dans la combinaison avec un poids minimal et inversement,
- suppression des interférences intersymboles et prise de décision par un module de traitement DFE s'adaptant sur un critère de minimisation de l'erreur quadratique moyenne entre décision "soft" et décision "hard".

La concaténation du traitement et du filtrage constituent une structure de filtrage spatio-temporel se différentiant du filtrage purement spatial par ses capacités à remettre en phase les multitrajets décorrélés du signal utile.

Bien que cette méthode soit sous-optimale, au sens de la rentabilisation de la base d'antennes, en présence de multitrajets des signaux brouilleurs, elle présente l'avantage de ne pas nécessiter de longues séquences d'apprentissage (adaptation des filtres spatio-temporels réalisée de façon indépendante sur chaque voie en sortie de prétraitement), le critère dimensionnant pour ce paramètre étant l'étalement temporel maximal du canal.

Concernant la troisième structure relative à la mise en oeuvre de la méthode d'adaptation FAST-DFE d'une structure de filtrage spatio-temporelle, aucune hypothèse restrictive concernant les caractéristiques statistiques du bruit n'ont été prises.

Son principe consiste en l'optimisation conjointe d'un filtre spatio-temporel et de la partie récursive d'un égaliseur à décision dans la boucle (décision feedback equalizer, DFE) sur un critère global de minimisation de l'erreur quadratique moyenne (EQM) entre la décision "soft" en sortie d'égaliseur et soit la séquence d'apprentissage (en début de processus), soit la décision "hard" (par la suite).

Les différents éléments de cette structure et leur agencement sont représentés sur la figure 12.

Le signal en sortie d'égaliseur $\tilde{z}(t)$ (décision "soft") s'exprime donc en fonction du signal multicapteur x(t) comme suit :

$$\tilde{z}(n) = \sum_{k=1}^{N} W_k^+\, x_k(n) - \sum_{l=1}^{N_{HR}} HR^\star(l)\, \tilde{z}(n-l) \qquad (60)$$

où $W_k$ désigne le filtre temporel appliqué sur la voie k,

$$x_k(n) = \left[ x_k(nT),\, x_k(nT + T_e),\dots,\, x_k\!\left(nT + (N_{HR} - 1)\,T_e\right) \right]^T$$

désigne la mémoire du filtre $W_k$ sur la voie k.

L'EQM, critère de minimisation adopté, s'exprime en fonction de l'expression précédente :

$$\xi = E\left[\left|\tilde{z}(t) - \hat{z}(t)\right|^2\right] \qquad (61)$$

Ce critère est estimé suivant le type de canal en présence :

- pour un canal stationnaire :

$$\hat{\xi}(n) = \frac{1}{n}\sum_{i=1}^{n}\left|\tilde{z}(i) - \hat{z}(i)\right|^2 \qquad (62)$$

- pour un canal non stationnaire :

$$\hat{\xi}(n) = \frac{1}{n}\sum_{i=1}^{n}\lambda^{(n-i)}\left|\tilde{z}(i) - \hat{z}(i)\right|^2 = \lambda\,\hat{\xi}(n-1) + \left|\tilde{z}(n) - \hat{z}(n)\right|^2 \qquad (63)$$

avec $\lambda$ facteur d'oubli ($0 < \lambda \leq 1$) à régler en fonction du degré de non stationnarité du canal.

De nombreux algorithmes pour estimer l'ensemble des filtres ($W_k$ avec k=1 à N, et HR) conduisent à chaque itération à la minimisation de l'EQM parmi lesquels on peut citer l'algorithme des moindres carrés récursifs (RLS en anglais), les algorithmes du gradient (Gradient Stochastique, Gradients Conjugués, etc.) et surtout l'algorithme "Recursive Modified Gram Schmidt" (décrit dans la thèse Telecom de J.L. FETY) sans doute l'algorithme actuel le mieux adapté pour effectuer cette estimation compte tenu de sa vitesse de convergence et de sa stabilité numérique.

Des simulations ont confirmé la supériorité de cette méthode par rapport à la méthode dite FAST-BBT-DFE dans des configurations de canal présentant des brouilleurs avec plusieurs trajets (composante bruit+brouilleur corrélée temporellement).

Cependant cet avantage a un coût au niveau de la longueur de la séquence de référence nécessaire pour faire converger l'estimation globale de tous les coefficients de la structure de filtrage.

Le tableau ci-après présente les principaux avantages et inconvénients des méthodes ci-dessus présentées :

| Méthode | Filtre spatial | Filtre spatio-temporel | |
|---|---|---|---|
| | FAS-DFE | FAST-BBT-DFE | FAST-DFE |
| Avantages | - faible complexité<br><br>- séquence d'apprentissage courte | - remet en phase les multitrajets utiles<br><br>- séquence d'apprentissage courte | - traitement quasi optimal, quel que soit le canal<br><br>- ne nécessite qu'un degré de liberté spatial par brouilleur (quel que soit le nombre de trajets) |
| Inconvénients | - sous-optimale en présence de multitrajets utiles<br><br>- nécessite un degré de liberté spatial par trajet brouilleur indépendant | - complexité moyenne<br><br>- sous-optimale en présence de multitrajet brouilleurs | - complexité moyenne<br><br>- séquence d'apprentissage longue |

En fonction du problème à traiter :

- configuration des trajets utiles,
- nombre et configuration des brouilleurs,
- longueur de la séquence d'apprentissage,
- nombre de capteurs,
- moyens de traitement envisageables.

L'analyse de la méthode présentant le meilleur compromis coûts/performances doit être effectuée.

Le multiplexage spatiale en émission selon la deuxième variante à l'invention suit le même principe que celui décrit dans le cas de la première variante à l'invention avec pour illustration la figure 4a à la place de la figure 4b.

La présente invention s'applique plus particulièrement aux stations de base bien que certains aspects du procédé selon l'invention qui vient d'être décrit puissent trouver des applications au niveau des mobiles notamment en ce qui concerne l'augmentation de leur sensibilité en réception.

Le principe de la première variante à la présente invention n'est pas limité à des mobiles mais peut s'appliquer également à des stations secondaires fixes déportées par rapport à la station de base.

L'égaliseur DFE mis en oeuvre dans la deuxième variante à la présente invention peut être remplacé par un égaliseur suivant le principe du maximum de vraisemblance mettant en oeuvre l'algorithme de Viterbi.

## Revendications

1. Procédé de multiplexage/démultiplexage spatial de signaux radioélectriques organisés en trames et transmis en duplex entre au moins une station de base et plusieurs mobiles communiquant sur un même canal fréquentiel et temporel au moyen d'un récepteur et d'un émetteur multivoie (1) intégrés dans la station de base et couplés à une base d'antennes, caractérisé en ce qu'il consiste, pour des signaux radioélectriques non gaussiens :

   - à estimer (2) l'information spatiale relative à chaque mobile à partir du signal reçu du mobile en configuration mono-émission par le récepteur multivoie, pour les fréquences de réception et d'émission, au moyen de méthodes de séparation de sources en aveugle, et à partir de cette information,
   - à isoler (3) par filtrage spatial, en présence ou non de multitrajets dans le canal, les trajets respectifs à chaque mobile dont la puissance est supérieure à un seuil déterminé pour permettre le démultiplexage spatial, et
   - à émettre simultanément en direction du trajet principal de chaque mobile le signal qui lui est destiné, en protégeant chaque mobile vis-à-vis des signaux émis vers les autres par filtrage spatial avec des contraintes d'annulation pour permettre le multiplexage spatial.

2. Procédé selon la revendication 1, caractérisé en ce qu'il consiste à permuter à chaque trame les fréquences émission et réception pour permettre l'acquisition de l'information spatiale sur les deux fréquences lorsqu'elles sont trop éloignées pour que cette information soit transposable de l'une à l'autre,

3. Procédé selon l'une quelconque des revendications 1 et 2, caractérisé en ce qu'il consiste pour optimiser l'efficacité du multiplexage et du démultiplexage spatial, à gérer l'affectation des canaux au niveau de l'ensemble des ressources fréquentielles et temporelles allouées à la station de base en fonction des mouvements des mobiles, en utilisant un critère de corrélation spatiale entre mobiles intégrant les informations spatiales acquises sur les deux fréquences utilisées alternativement pour la transmission duplex.

4. Procédé selon l'une quelconque des revendications 1 à 3, caractérisé en ce que le filtrage spatial en émission du signal, à destination d'un mobile déterminé, est adapté à partir d'une matrice de corrélation synthétique de signal bruit+brouilleurs, établie à partir de paires de brouilleurs fictifs disposés spatialement de part et d'autre des mobiles en direction desquelles la station de base ne doit pas émettre ce signal, de façon à élargir les trous" du diagramme de rayonnement en direction des brouilleurs et par conséquent à augmenter la tolérance du système aux erreurs de pointage consécutives aux erreurs résiduelles de tarage des voies d'émission et de réception.

5. Procédé selon l'une quelconque des revendications 1 à 4, caractérisé en ce qu'il consiste à appliquer périodiquement une procédure de tarage des chaînes d'émission et de réception de chaque voie formée par la base d'antennes et de pré-correction d'amplification à l'émission afin de limiter les erreurs de pointage en émission,

6. Dispositif pour la mise en oeuvre du procédé selon la revendication 1, caractérisé en ce qu'il comporte :

- une base d'antennes émission/réception (4) couplée à des moyens de commutation et de tarage (5),
- un récepteur multivoie (6) comportant des moyens de transposition de fréquence, d'amplification et de conversion analogique/numérique, couplé en sortie des moyens de commutation et de tarage (5),
- un démultiplexeur spatial (7), couplé en sortie du récepteur multivoie (6), comportant un nombre déterminé de filtres spatiaux, chaque filtre spatial formant un canal spatial,
- un nombre déterminé de démodulateurs (8i) égal au nombre de canaux spatiaux déterminés par canal fréquentiel et temporel, couplés en sortie du démultiplexeur (7), et délivrant sur le réseau des stations de base les données émises par les mobiles,
- un nombre déterminé de modulateurs (11i) égal au nombre de démodulateurs (8i), recevant respectivement des données reçues du réseau des stations de base et à émettre par la base d'antennes (4) à destination des mobiles,
- un multiplexeur spatial (10), couplé en sortie des modulateurs (11i), comportant un nombre déterminé de filtres spatiaux égal au nombre de modulateurs (11i),
- un émetteur multivoie (9) comportant des moyens de conversion numérique/analogique, de transposition de fréquence et d'amplification, couplé en sortie du multiplexeur spatial (10), et

en ce qu'il comporte:

- un module de traitement numérique AMRS (12) qui comporte un contrôleur AMRS (13) et un estimateur (14) pour estimer des vecteurs directeurs des trajets relatifs aux mobiles à partir du signal reçu du mobile en configuration mono-émission, ces mobiles communiquant avec la station de base, et qui permet la réactualisation des poids des filtres spatiaux à l'émission et à la réception, la gestion des fréquences d'émission et de réception, et les commandes des moyens de commutation et de tarage (5).

7. Dispositif selon la revendication 6, caractérisé en ce que les moyens de tarage comportent pour chaque voie (i), comportant respectivement une chaîne d'émission (22i) et une chaîne de réception (17i), et formée respectivement par chaque antenne de la base d'antennes (4) :

- un filtre d'égalisation du signal d'émission (22i) couplé en entrée de la chaîne d'émission (20i),
- un filtre d'égalisation (18i) du signal de réception couplé en sortie de la chaîne de réception (17i),
- un commutateur en entrée (25i) et en sortie (26i) de la chaîne de réception (17i), un commutateur (27i) en entrée de la chaîne d'émission (20i) et un commutateur deux voies (23i) en sortie de la chaîne émission (20i), permettant au dispositif de passer dans les différents modes de fonctionnement : tarage réception, tarage émission, émission/réception,
- un coupleur (21i) disposé entre l'antenne (Ai) et le commutateur deux voies (23i), permettant de prélever une partie du signal d'émission pour l'injecter à l'entrée de la chaîne de réception (17i) via le commutateur d'entrée (25i) de la chaîne de réception (17i),

et en ce qu'il comporte en commun pour toutes les voies (i) :

- un analyseur de tarage (19) permettant l'analyse des différents signaux de tarage arrivant sur les commutateurs d'entrée (27i) et de sortie (26i) respectivement des chaînes d'émission (20i) et de réception (17i), et permettant d'adapter les filtres d'égalisation (22i et 18i) des chaînes d'émission et de réception (20i et 17i).

8. Dispositif selon la revendication 7, caractérisé en ce qu'un filtre de pré-correction (28i) de la chaîne d'émission (20i) est disposé entre le filtre d'égalisation (22i) de la chaîne d'émission (20i) et la chaîne d'émission (20i).

9. Dispositif selon l'une quelconque des revendications 6 à 8, caractérisé en ce qu'il comporte en outre, pour la permutation des fréquences émission et réception d'un même canal fréquentiel, un contrôleur de permutation de fréquences (16i), couplé respectivement au récepteur (6) et à l'émetteur (9) multivoie, et aux moyens de commutation et de tarage (5).

10. Procédé de multiplexage/démultiplexage spatial de signaux radioélectriques numériques organisés en trames, comportant des séquences connues a priori, et transmis en duplex entre au moins une station de base et plusieurs mobiles communiquant sur un même canal fréquentiel et temporel au moyen d'un récepteur et d'un émetteur multivoie (1) intégrés dans la station de base et couplés à une base d'antennes, caractérisé en ce qu'il consiste :

- à estimer (2) l'information spatiale relative à chaque mobile, à partir du signal reçu du mobile en configuration mono-émission par le récepteur multivoie, pour les fréquences de réception et d'émission, au moyen de méthodes de filtrage, en exploitant les séquences connues a priori, et à partir de cette information,

- à isoler (3), en présence ou non de multitrajets dans le canal, les trajets respectifs à chaque mobile dont la puissance est supérieure à un seuil déterminé, et à démoduler le signal reçu de chacun des mobiles en liaison avec la station de base, pour permettre le démultiplexage spatial, et
- à émettre simultanément en direction du trajet principal de chaque mobile le signal qui lui est destiné, en protégeant chaque mobile vis-à-vis des signaux émis vers les autres par filtrage spatial avec des contraintes d'annulation pour permettre le multiplexage spatial.

11. Procédé selon la revendication 10, caractérisé en ce qu'il consiste à isoler les principaux trajets par filtrage spatial.

12. Procédé selon la revendication 11, caractérisé en ce que le filtrage spatial est mis en oeuvre par une structure FAS associée à un organe de décision et d'égalisation.

13. Procédé selon la revendication 10, caractérisé en ce qu'il consiste à isoler les principaux trajets par filtrage spatio-temporel.

14. Procédé selon la revendication 13, caractérisé en ce que le filtrage spatio-temporel est mis en oeuvre par une structure FAST-BBT associée à un organe de décision et d'égalisation.

15. Procédé selon les revendications 12 et 14, caractérisé en ce que l'organe de décision et d'égalisation est mis en oeuvre par un DFE.

16. Procédé selon les revendications 12 et 14, caractérisé en ce que l'organe de décision et d'égalisation met en oeuvre l'algorithme de Viterbi.

17. Procédé selon la revendication 13, caractérisé en ce que le filtrage spatio-temporel est mis en oeuvre par une structure FAST-DFE.

18. Procédé selon l'une quelconque des revendications 10 à 17, caractérisé en ce que l'estimation de l'information spatiale est effectuée à partir de la valeur prise par une fonction de détection multivoie de la séquence connue a priori, à l'instant optimal de synchronisation correspondant à l'instant d'arrivée du trajet le plus puissant.

19. Procédé selon l'une quelconque des revendications 10 à 18, caractérisé en ce qu'il consiste à permuter à chaque trame les fréquences émission et réception pour permettre l'acquisition de l'information spatiale sur les deux fréquences lorsqu'elles sont trop éloignées pour que cette information soit transposable de l'une à l'autre,

20. Procédé selon l'une quelconque des revendications 10 à 19, caractérisé en ce qu'il consiste pour optimiser l'efficacité du multiplexage et du démultiplexage spatial, à gérer l'affectation des canaux au niveau de l'ensemble des ressources fréquentielles et temporelles allouées à la station de base en fonction des mouvements des mobiles, en utilisant un critère de corrélation spatiale entre mobiles intégrant les informations spatiales acquises sur les deux fréquences utilisées alternativement pour la transmission duplex.

21. Procédé selon l'une quelconque des revendications 10 à 20, caractérisé en ce que le filtrage spatial en émission du signal à destination d'un mobile déterminé est adapté à partir d'une matrice de corrélation synthétique de signal bruit+brouilleurs établie à partir de paires de brouilleurs fictifs disposés spatialement de part et d'autre des mobiles en direction desquelles la station de base ne doit pas émettre ce signal de façon à élargir les "trous" du diagramme de rayonnement en direction des brouilleurs et par conséquent à augmenter la tolérance du système aux erreurs de pointage consécutives aux erreurs résiduelles de tarage des voies d'émission et de réception.

22. Procédé selon l'une quelconque des revendications 10 à 21, caractérisé en ce qu'il consiste à appliquer périodiquement une procédure de tarage et de pré-correction d'amplification à l'émission afin de limiter les erreurs de pointage en émission.

23. Dispositif pour la mise en oeuvre du procédé selon la revendication 10, caractérisé en ce qu'il comporte :

- une base d'antennes émission/réception (4) couplée à des moyens de commutation et de tarage (5),
- un récepteur multivoie (6) comportant des moyens de transposition de fréquence, d'amplification et de conversion analogique/numérique, couplé en sortie des moyens de commutation et de tarage (5),
- un démultiplexeur spatial (7), couplé en sortie du récepteur multivoie (6), comportant un nombre déterminé de filtres spatiaux ou spatio-temporels, chaque filtre spatial ou spatio-temporel formant respectivement un canal spatial ou spatio-temporel,
- un nombre déterminé de démodulateurs (8i) égal au nombre de canaux spatiaux déterminés par canal fréquentiel et temporel, couplés en sortie du démultiplexeur (7), et délivrant sur le réseau des stations de base les données émises par les mobiles,
- un nombre déterminé de modulateurs (11i) égal au nombre de démodulateurs (8i), recevant respectivement des données à émettre par la base d'antennes (4) à destination des mobiles,
- un multiplexeur spatial (10), couplé en sortie des modulateurs (11i), comportant un nombre déterminé de filtres spatiaux égal au nombre de modulateurs (11i),
- un émetteur multivoie (9) comportant des moyens de conversion numérique/analogique, de transposition de fréquence et d'amplification, couplé en sortie du multiplexeur spatial (10), et

en ce qu'il comporte :

- un module de traitement numérique AMRS (12) qui comporte un contrôleur AMRS (13) et un estimateur (14) pour estimer des vecteurs directeurs des trajets relatifs aux mobiles à partir du signal reçu du mobile en configuration mono-émission, ces mobiles communiquant avec la station de base, et qui permet la réactualisation des poids des filtres spatiaux à l'émission et des filtres spatiaux ou spatio-temporels à la réception, la gestion des fréquences d'émission et de réception, et les commandes des moyens de commutation et de tarage.

24. Dispositif selon la revendication 23, caractérisé en ce que les moyens de tarage comportent pour chaque voie (i) formée respectivement par chaque antenne de la base d'antennes (4) :

- un filtre d'égalisation du signal d'émission (22i) couplé en entrée de la chaîne d'émission (20i),
- un filtre d'égalisation (18i) du signal de réception couplé en sortie de la chaîne de réception (17i),
- un commutateur en entrée (25i) et en sortie (26i) de la chaîne de réception (17i), un commutateur (27i) en entrée de la chaîne d'émission (20i) et un commutateur deux voies (23i) en sortie de la chaîne émission (20i), permettant au dispositif de passer dans les différents modes de fonctionnement : tarage réception, tarage émission, émission/réception,
- un coupleur (21i) disposé entre l'antenne (Ai) et le commutateur deux voies (23i), permettant de prélever une partie du signal d'émission pour l'injecter à l'entrée de la chaîne de réception (17i) via le commutateur d'entrée (25i) de la chaîne de réception (17i),

et en ce qu'il comporte en commun pour toutes les voies (i) :

- un analyseur de tarage (19) permettant l'analyse des différents signaux de tarage arrivant sur les commutateurs d'entrée (27i) et de sortie (26i) respectivement des chaînes d'émission (20i) et de réception (17i), et permettant d'adapter les filtres d'égalisation (22i et 18i) des chaînes d'émission et de réception (20i et 17i).

25. Dispositif selon la revendication 24, caractérisé en ce qu'un filtre de pré-correction (28i) de la chaîne d'émission (20i) est disposé entre le filtre d'égalisation de la chaîne d'émission (20i) et la chaîne d'émission (20i).

26. Dispositif selon l'une quelconque des revendications 23 à 25, caractérisé en ce qu'il comporte en outre, pour la permutation des fréquences émission et réception d'un même canal fréquentiel, un contrôleur de permutation de fréquences (16i), couplé respectivement au récepteur (6) et à l'émetteur (9) multivoie, et aux moyens de commutation et de tarage (5).

**Patentansprüche**

1. Verfahren zur räumlichen Multiplexierung/Demultiplexierung von radioelektrischen Signalen, die in Rahmen organisiert sind und im Duplexbetrieb zwischen wenigstens einer Basisstation und mehreren Mobilstationen übertragen werden, die auf demselben Frequenz-Zeit-Kanal mittels eines Mehrwegempfängers und -Senders (1), die in die Basisstation integriert sind und an eine Antennenbasis angeschlossen sind, kommunizieren, dadurch gekennzeichnet, daß es für die nicht-gaußschen radioelektrischen Signale darin besteht:

- die auf jede Mobilstation bezogenen räumlichen Informationen anhand des von der Mobilstation vom Mehrwegempfänger in einer Monosendekonfiguration empfangenen Signals für die Empfangs- und Sendefrequenzen mittels Blindquellen-Trennverfahren zu schätzen (2) und anhand dieser Informationen
- durch räumliche Filterung bei Vorhandensein oder Nichtvorhandensein von Mehrfachwegen in dem Kanal die Wege, die auf jede der Mobilstationen bezogen sind, deren Leistung höher als eine gegebene Schwelle ist, zu isolieren (3), um die räumliche Demultiplexierung zu ermöglichen, und
- gleichzeitig in Richtung des Hauptweges jeder Mobilstation das Signal zu senden, das für sie bestimmt ist, indem jede Mobilstation vor Signalen, die von den anderen gesendet werden, durch räumliche Filterung mit Unterdrückungszwang zu schützen, um die räumliche Multiplexierung zu ermöglichen.

2. Verfahren nach Anspruch 1, dadurch gekennzeichnet, daß es darin besteht, bei jedem Rahmen die Sende- und Empfangsfrequenzen zu permutieren, um die Erfassung der räumlichen Informationen auf den beiden Frequenzen zu ermöglichen, wenn sie zu weit voneinander entfernt sind, damit diese Informationen ineinander transponiert werden können.

3. Verfahren nach irgendeinem der Ansprüche 1 und 2, dadurch gekennzeichnet, daß es darin besteht, zur Optimierung des Wirkungsgrades der räumlichen Multiplexierung und der räumlichen Demultiplexierung die Zuordnung der Kanäle auf seiten der Gesamtheit der der Basisstation zugewiesenen Frequenz- und Zeit-Betriebsmittel in Abhängigkeit von den Bewegungen der Mobilstationen zu steuern, indem ein räumliches Korrelationskriterium zwischen den Mobilstationen verwendet wird, das die erfaßten räumlichen Informationen auf den beiden für die Duplexübertragung abwechselnd verwendeten Frequenzen integriert.

4. Verfahren nach irgendeinem der Ansprüche 1 bis 3, dadurch gekennzeichnet, daß die räumliche Filterung beim Senden des Signals an eine bestimmte Mobilstation anhand einer synthetischen Korrelationsmatrix des Rausch- und Störsender-Signals angepaßt wird, wobei die Matrix anhand von Paaren fiktiver Störsender erstellt wird, die räumlich beiderseits der Mobilstationen angeordnet sind, in deren Richtung die Basisstation dieses Signal nicht senden darf, um so die "Löcher" des Stahlungsdiagramms in Richtung der Störsender zu vergrößern und folglich die Toleranz des Systems gegenüber Peilungsfehlern zu erhöhen, die Restabgleichsfehlern der Sende- und Empfangswege nachfolgen.

5. Verfahren nach irgendeinem der Ansprüche 1 bis 4, dadurch gekennzeichnet, daß es darin besteht, periodisch eine Abgleichprozedur der Sende- und Empfangsketten jedes durch die Antennenbasis gebildeten Weges und eine Verstärkungsvorkorrektur beim Senden anzuwenden, um die Peilungsfehler beim Senden zu begrenzen.

6. Vorrichtung zur Ausführung des Verfahrens nach Anspruch 1, dadurch gekennzeichnet, daß sie enthält:

- eine Sende/Empfangs-Antennenbasis (4), die mit Umschalt- und Abgleichmitteln (5) gekoppelt ist,
- einen Mehrwegempfänger (6), der Frequenztransponierungs-, Verstärkungs- und Analog/Digital-Umsetzungsmittel enthält und an den Ausgang der Umschalt- und Abgleichmittel (5) angeschlossen ist,
- einen räumlichen Demultiplexer (7), der an den Ausgang des Mehrwegempfängers (6) angeschlossen ist und eine bestimmte Anzahl räumlicher Filter enthält, wovon jedes einen räumlichen Kanal bildet,
- eine bestimmte Anzahl von Demodulatoren (8i), die gleich der Anzahl der bestimmten räumlichen Kanäle pro Frequenz- und Zeitkanal ist, die an den Ausgang des Demultiplexers (7) angeschlossen sind und in das Netz von Basisstationen die von den Mobilstationen gesendeten Daten ausgeben,
- eine bestimmte Anzahl von Modulatoren (11i), die gleich der Anzahl von Demodulatoren (8i) ist, die jeweils die vom Netz von Basisstationen empfangenen Daten empfangen, die von der Antennenbasis (4) an die Mobilstationen zu senden sind,
- einen räumlichen Multiplexer (10) der an den Ausgang der Modulatoren (11i) angeschlossen ist und eine bestimmte Anzahl räumlicher Filter enthält, die gleich der Anzahl von Modulatoren (11i) ist,
- einen Mehrwegsender (9), der Digital/Analog-Umsetzungs-, Frequenztransponierungs- und Verstärkungsmittel enthält und an den Ausgang des räumlichen Multiplexers (10) angeschlossen ist, und

   daß sie enthält:

- ein digitales Verarbeitungsmodul AMRS (12), das einen AMRS-Controller (13) und eine Schätzeinrichtung (14) zum Schätzen der Richtungsvektoren der auf die Mobilstationen bezogenen Wege anhand des von der Mobilstation empfangenen Signals in einer Monosendekonfiguration enthält, wobei diese Mobilstationen mit der Basisstation kommunizieren, und das die Reaktualisierung der Gewichte der räumlichen Filter beim Senden und beim Empfangen, die Steuerung der Sende- und Empfangsfrequenzen sowie die Steuerungen der Umschalt- und Abgleichmittel (5) ermöglicht.

7. Vorrichtung nach Anspruch 6, dadurch gekennzeichnet, daß die Abgleichmittel für jeden Weg (i), der eine Sendekette (22i) und eine Empfangskette (17i) enthält und durch jeweils eine der Antennen der Antennenbasis (4) gebildet ist, enthalten:

- ein Entzerrfilter (22i) für das Sendesignal, das an den Eingang der Sendekette (20i) angeschlossen ist,
- ein Entzerrfilter (18i) für das Empfangssignal, das an den Ausgang der Empfangskette (17i) angeschlossen ist,
- einen Umschalter (25i) am Eingang und einen Umschalter (26i) am Ausgang der Empfangskette (17i), einen Umschalter (27i) am Eingang der Sendekette (20i) und einen Zweiwege-Umschalter am Ausgang der Sendekette (20i), die der Vorrichtung ermöglichen, in die verschiedenen Betriebsarten: Empfangsabgleich, Sendeabgleich, Senden/Empfangen, überzugehen,
- einen Koppler (21i), der zwischen der Antenne (Ai) und dem Zweiwege-Umschalter (23i) angeordnet ist und den Abgriff eines Teils des Sendesignals ermöglicht, um ihn in den Eingang der Empfangskette (17i) über den Eingangsumschalter (25i) der Empfangskette (17i) einzugeben,

und daß sie gemeinsam für sämtliche Wege (i) enthält:

- einen Abgleichanalysator (19), der die Analyse der verschiedenen Abgleichsignale ermöglicht, die bei den Eingangsumschaltern (27i) und Ausgangsumschaltern (26i) der Sendeketten (20i) bzw. der Empfangsketten (17i) ankommen, und die Anpassung der Entzerrfilter (22i und 18i) der Sende- und Empfangsketten (20i und 17i) ermöglicht.

8. Vorrichtung nach Anspruch 7, dadurch gekennzeichnet, daß zwischen dem Entzerrfilter (22i) der Sendekette (20i) und der Sendekette (20i) ein Vorkorrekturfilter (28i) der Sendekette (20i) angeordnet ist.

9. Vorrichtung nach irgendeinem der Ansprüche 6 bis 8, dadurch gekennzeichnet, daß sie außerdem für die Permutation der Sende- und Empfangsfrequenzen desselben Frequenzkanals einen Frequenzpermutations-Controller (16i) enthält, der an den Mehrwegempfänger (6) bzw. an den Mehrwegsender (9) und an die Umschalt-Abgleichmittel (5) angeschlossen ist.

10. Verfahren zur räumlichen Multiplexierung/Demultiplexierung von digitalen radioelektrischen Signalen, die in Rahmen organisiert sind und von vornherein bekannte Sequenzen enthalten und im Duplexbetrieb zwischen wenigstens einer Basisstation und mehreren Mobilstationen übertragen werden, die auf demselben Frequenz- und Zeitkanal mittels eines Mehrwegempfängers und eines Mehrwegsenders (1), die in die Basisstation integriert sind und an eine Antennenbasis gekoppelt sind, kommunizieren, dadurch gekennzeichnet, daß es darin besteht:

- die räumlichen Informationen, die auf jede Mobilstation bezogen sind, anhand des von der Mobilstation in einer Monosendekonfiguration durch den Mehrwegempfänger empfangenen Signals für die Empfangs- und Sendefrequenzen mittels Filterungsverfahren zu schätzen (2), indem die von vornherein bekannten Sequenzen ausgewertet werden, und anhand dieser Informationen
- bei Vorhandensein oder Nichtvorhandensein von mehreren Wegen im Kanal diejenigen Wege, die auf jede der Mobilstationen bezogen sind, deren Leistung oberhalb einer bestimmten Schwelle liegt, zu isolieren (3) und das empfangene Signal jeder mit einer Basisstation in Verbindung stehenden Mobilstation zu demodulieren, um die räumliche Demultiplexierung zu ermöglichen, und
- gleichzeitig in Richtung des Hauptweges jeder Mobilstation das Signal, das für sie bestimmt ist, zu senden, indem jede Mobilstation vor Signalen, die von den anderen gesendet werden, mittels räumlicher Filterung mit Unterdrückungszwang geschützt wird, um die räumliche Multiplexierung zu ermöglichen.

11. Verfahren nach Anspruch 10, dadurch gekennzeichnet, daß es darin besteht, die Hauptwege durch räumliche Filterung zu isolieren.

12. Verfahren nach Anspruch 11, dadurch gekennzeichnet, daß die räumliche Filterung durch eine FAS-Struktur ausgeführt wird, die einem Entscheidungs- und Entzerrungselement zugeordnet ist.

13. Verfahren nach Anspruch 10, dadurch gekennzeichnet, daß es darin besteht, die Hauptwege durch raumzeitliche Filterung zu isolieren.

**14.** Verfahren nach Anspruch 13, dadurch gekennzeichnet, daß die raumzeitliche Filterung durch eine FAST-BBT-Struktur ausgeführt wird, der ein Entscheidungs- und Entzerrungselement zugeordnet ist.

**15.** Verfahren nach den Ansprüchen 12 und 14, dadurch gekennzeichnet, daß das Entscheidungs- und Entzerrungselement durch eine DFE ausgeführt wird.

**16.** Verfahren nach den Ansprüchen 12 und 14, dadurch gekennzeichnet, daß das Entscheidungs- und Entzerrungselement einen Viterbi-Algorithmus ausführt.

**17.** Verfahren nach Anspruch 13, dadurch gekennzeichnet, daß die raumzeitliche Filterung durch eine FAST-DFE-Struktur ausgeführt wird.

**18.** Verfahren nach irgendeinem der Ansprüche 10 bis 17, dadurch gekennzeichnet, daß die Schätzung der räumlichen Informationen anhand des Wertes ausgeführt wird, der durch eine Mehrwegerfassungsfunktion der von vornherein bekannten Sequenz zum optimalen Synchronisationszeitpunkt, der dem Zeitpunkt der Ankunft des leistungsstärksten Weges entspricht, abgegriffen wird.

**19.** Verfahren nach irgendeinem der Ansprüche 10 bis 18, dadurch gekennzeichnet, daß es darin besteht, in jedem Rahmen die Sende- und Empfangsfrequenzen zu permutieren, um die Erfassung der räumlichen Informationen mit den beiden Frequenzen zu ermöglichen, wenn sie zu weit voneinander entfernt sind, damit diese Informationen ineinander transponiert werden können.

**20.** Verfahren nach irgendeinem der Ansprüche 10 bis 19, dadurch gekennzeichnet, daß es darin besteht, zur Optimierung des Wirkungsgrades der räumlichen Multiplexierung und der räumlichen Demultiplexierung die Zuordnung der Kanäle auf seiten der Gesamtheit von der Basisstation zugewiesenen Frequenz- und Zeit-Betriebsmitteln in Abhängigkeit von den Bewegungen der Mobilstationen zu steuern, indem ein räumliches Korrelationskriterium zwischen den Mobilstationen verwendet wird, das die erfaßten räumlichen Informationen auf den beiden Frequenzen, die abwechselnd für die Duplexübertragung verwendet werden, integriert.

**21.** Verfahren nach irgendeinem der Ansprüche 10 bis 20, dadurch gekennzeichnet, daß die räumliche Filterung beim Senden des Signals an eine bestimmte Mobilstation anhand einer synthetischen Korrelationsmatrix des Rausch- und Störsender-Signals angepaßt wird, das ausgehend von Paaren fiktiver Störsender erstellt wird, die räumlich beiderseits der Mobilstationen angeordnet sind, in deren Richtung die Basisstation dieses Signal nicht senden darf, um somit die "Löcher" des Strahlungsdiagramms in Richtung der Störsender zu vergrößern und um folglich die Toleranz des Systems gegenüber Peilungsfehlern zu erhöhen, die Restabgleichfehlern der Sende- und Empfangswege nachfolgen.

**22.** Verfahren nach irgendeinem der Ansprüche 10 bis 21, dadurch gekennzeichnet, daß es darin besteht, periodisch eine Abgleich- und Verstärkungsvorkorrektur-Prozedur beim Senden anzuwenden, um die Peilungsfehler beim Senden zu begrenzen.

**23.** Vorrichtung zum Ausführen des Verfahrens nach Anspruch 10, dadurch gekennzeichnet, daß sie enthält:

- eine Sende/Empfangs-Antennenbasis (4), die an Umschalt- und Abgleichmittel (5) angeschlossen ist,
- einen Mehrwegempfänger (6) der Frequenztransponierungs-, Verstärkungs- und Analog/Digital-Umsetzungsmittel enthält und an den Ausgang der Umschalt- und Abgleichmittel (5) angeschlossen ist,
- einen räumlichen Demultiplexer (7), der an den Ausgang des Mehrwegempfängers (6) angeschlossen ist und eine bestimmte Anzahl von räumlichen oder raumzeitlichen Filtern enthält, wovon jedes einen räumlichen bzw. einen raumzeitlichen Kanal bildet,
- eine bestimmte Anzahl von Demodulatoren (8i), die gleich der Anzahl der bestimmten räumlichen Kanäle pro Frequenz- und Zeitkanal ist, die an den Ausgang des Demultiplexers (7) angeschlossen sind und in das Netz von Basisstationen die von den Mobilstationen gesendeten Daten ausgeben,
- eine bestimmte Anzahl von Modulatoren (11i), die gleich der Anzahl von Demodulatoren (8i) ist, die jeweils die von der Antennenbasis (4) an die entsprechenden Mobilstationen zu sendenden Daten empfangen,
- einen räumlichen Multiplexer (10), der an den Ausgang der Modulatoren (11i) angeschlossen ist und eine bestimmte Anzahl von räumlichen Filtern enthält, die gleich der Anzahl von Modulatoren (11i) ist,
- einen Mehrwegsender (9), der Digital/Analog-Umsetzungs-, Frequenztransponierungs- und Verstärkungsmittel enthält und an den Ausgang des räumlichen Multiplexers (10) angeschlossen ist, und

daß sie enthält:

- ein digitales Verarbeitungsmodul AMRS (12), das einen AMRS-Controller (13) und eine Schätzeinrichtung (14) zum Schätzen der Richtungsvektoren der auf die Mobilstationen bezogenen Wege anhand des von der Mobilstation empfangenen Signals in einer Monosendekonfiguration enthält, wobei diese Mobilstationen mit der Basisstation kommunizieren, und das die Reaktualisierung der Gewichte der räumlichen Filter beim Senden und der räumlichen oder raumzeitlichen Filter beim Empfang, die Steuerung der Sende- und Empfangsfrequenzen sowie die Steuerungen der Umschalt- und Abgleichmittel ermöglicht.

24. Vorrichtung nach Anspruch 23, dadurch gekennzeichnet, daß die Abgleichmittel für jeden Weg (i), der jeweils durch eine Antenne der Antennenbasis (4) gebildet ist, enthalten:

- ein Entzerrfilter für das Sendesignal (22i), das an den Eingang der Sendekette (20i) angeschlossen ist,
- ein Entzerrfilter (18i) für das Empfangssignal, das an den Ausgang der Empfangskette (17i) angeschlossen ist,
- einen Umschalter (25i) am Eingang und einen Umschalter (26i) am Ausgang der Empfangskette (17i), einen Umschalter (27i) am Eingang der Sendekette (20i) und einen Zweiwege-Umschalter (23i) am Ausgang der Sendekette (20i), die der Vorrichtung ermöglichen, in die verschiedenen Betriebsarten: Empfangsabgleich, Sendeabgleich, Senden/Empfangen, überzugehen,
- einen Koppler (21i), der zwischen der Antenne (Ai) und dem Zweiwege-Umschalter (23i) angeordnet ist und den Abgriff eines Teils des Sendesignals ermöglicht, um ihn in den Eingang der Empfangskette (17i) über den Eingangsumschalter (25i) der Empfangskette (17i) einzugeben,

und daß sie gemeinsam für sämtliche Wege (i) enthält:

- einen Abgleichanalysator (19), der die Analyse der verschiedenen Abgleichsignale ermöglicht, die bei den Eingangsumschaltern (27i) und Ausgangsumschaltern (26i) der Sendeketten (20i) bzw. der Empfangsketten (17i) ankommen, und die Anpassung der Entzerrfilter (22i und 18i) der Sende- und Empfangsketten (20i und 17i) ermöglicht.

25. Vorrichtung nach Anspruch 24, dadurch gekennzeichnet, daß zwischen dem Entzerrfilter der Sendekette (20i) und der Sendekette (20i) ein Vorkorrekturfilter (28i) der Sendekette (20i) angeordnet ist.

26. Vorrichtung nach irgendeinem der Ansprüche 23 bis 25, dadurch gekennzeichnet, daß sie außerdem für die Permutation der Sende- und Empfangsfrequenzen desselben Frequenzkanals einen Frequenzpermutations-Controller (16i) enthält, der an den Mehrwegempfänger (6) bzw. an den Mehrwegsender (9) und an die Umschalt- und Abgleichmitteln (5) angeschlossen ist.


## Claims

1. Method for spatial multi-plexing/demultiplexing of radio signals which are organized in frames and are transmitted in duplex between at least one base station and a plurality of mobile units communicating on the same frequency and time channel by means of a multipath receiver and transmitter (1) which are integrated in the base station and are coupled to an antenna base, characterized in that it consists, for non-gaussian radio signals:

- in estimating (2) the spatial information relating to each mobile unit on the basis of the signal received from the mobile unit in single-transmission configuration by the multipath receiver, for the reception and transmission frequencies, by means of blind source separation methods, and on the basis of this information,
- in isolating (3) by spatial filtering, possibly in the presence of multiple routes in the channel, the respective routes to each mobile unit whose power is greater than a determined threshold to allow spatial demultiplexing, and
- in simultaneously transmitting in the direction of the main route of each mobile unit, the signal which is intended for it, while protecting each mobile unit from the signals transmitted to the others by spatial filtering with cancelling constraints to allow the spatial multiplexing.

2. Method according to Claim 1, characterized in that it consists, in each frame, in permuting the transmission and reception frequencies to make it possible to acquire the spatial information on the two frequencies when they are too far apart for this information to be transposable from one to the other.

3. Method according to any one of Claims 1 to 2, characterized in that it consists, for optimizing the efficiency of the spatial multiplexing and demultiplexing, in managing the assignment of the channels in all the frequency and time resources allocated to the base station as a function of the movements of the mobile units, by using a criterion of spatial correlation between the mobile units incorporating the spatial information acquired on the two frequencies used alternately for the duplex transmission.

4. Method according to any one of Claims 1 to 3 characterized in that the spatial filtering when transmitting the signal intended for a determined mobile unit is adapted on the basis of a synthetic correlation matrix for noise + interference-source signal, established on the basis of pairs of fictitious interference sources arranged spatially on either side of the mobile units in the direction of which the base station should not transmit this signal, so as to widen the "holes" of the radiation diagram in the direction of the interference sources and consequently to increase the tolerance of the system with respect to aiming errors due to residual errors in setting of the transmission and reception paths.

5. Method according to any one of Claims 1 to 4, characterized in that it consists in periodically applying a procedure for setting of the transmission and reception chains of each path formed by the antenna base and for pre-correcting the gain on transmission in order to limit the aiming errors in transmission.

6. Device for implementing the method according to Claim 1, characterized in that it includes:

   - a transmission/reception antenna base (4) coupled to switching and setting means (5),
   - a multipath receiver (6) including means for frequency transposition, amplification and analogue/digital conversion, which is coupled to the output of the switching and setting means (5),
   - a spatial demultiplexer (7) coupled to the output of the multipath receiver (6) and including a determined number of spatial filters, each spatial filter forming one spatial channel,
   - a determined number of demodulators (8i) equal to the number of spatial channels determined per frequency and time channel, which are coupled to the output of the demultiplexer (7) and supply the base station network with the data transmitted by the mobile units,
   - a determined number of modulators (IIi) equal to the number of demodulators (8i), respectively receiving data received from the base station network and to be transmitted by the antenna base (4) to the mobile units,
   - a spatial multiplexer (10), coupled to the output of the modulators (IIi) and including a determined number of spatial filters equal to the number of modulators (IIi),
   - a multipath transmitter (9) including means for analogue/digital conversion, frequency transposition and amplification, which is coupled to the output of the spatial multiplexer (10), and

   in that it includes:

   - an SDMA digital processing module (12) which includes an SDMA controller (13) and an estimator (14) for estimating the direction vectors of the routes relating to the mobile units on the basis of the signal received from the mobile unit in single-transmission configuration, these mobile units communicating with the base station, and which makes it possible to update the weightings of the spatial filters on transmission and reception, manage the transmission and reception frequencies, and control the switching and setting means (5).

7. Device according to Claim 6, characterized in that the setting means include, for each path (i), respectively including a transmission system (22i) and a reception system (17i), and respectively formed by each antenna of the antenna base (4):

   - a filter (22i) for equalizing the transmission signal, coupled to the input of the transmission system (20i),
   - a filter (18i) for equalizing the reception signal, coupled to the output of the reception system (17i),
   - a switch at the input (25i) and at the output (26i) of the reception system (17i), a switch (27i) at the input of the transmission system (20i) and a two-way switch (23i) at the output of the transmission system (20i), allowing the device to change to the various operating modes: reception setting, transmission setting, transmission/reception,
   - a coupler (21i) arranged between the antenna (Ai) and the two-way switch (23i), making it possible to sample part of the transmission signal and inject it at the input of the reception system (17i) via the input switch (25i) of the reception system (17i),

   and in that it includes, in common for all the paths (i):

- a setting analyser (19) for analysing the various setting signals arriving on the input (27i) and output (26i) switches, respectively, of the transmission (20i) and reception (17i) systems, and for adapting the equalizing filters (22i and 18i) of the transmission and reception systems (20i and 17i).

**8.** Device according to Claim 7, characterized in that a filter (28i) for pre-correcting the transmission system (20i) is arranged between the equalizing filter (22i) of the transmission system (20i) and the transmission system (20i).

**9.** Device according to any one of Claims 6 to 8, characterized in that it furthermore includes, for permuting the transmission and reception frequencies on the same frequency channel, a frequency permutation controller (16i) coupled respectively to the multipath receiver (6) and transmitter (9), and to the switching and setting means (5).

**10.** Method for spatial multiplexing/ demultiplexing of digital radio signals organized in frames, including sequences which are known a priori and are transmitted in duplex between at least one base station and a plurality of mobile units communicating on the same frequency and time channel by means of a multipath receiver and transmitter (1) which are integrated in the base station and are coupled to an antenna base, characterized in that it consists:

- in estimating (2) the spatial information relating to each mobile unit, on the basis of the signal received from the mobile unit in single-transmission configuration by the multipath receiver, for the reception and transmission frequencies, by means of filtering methods, while utilizing the a priori known sequences, and on the basis of this information,
- in isolating (3), possibly in the presence of multiple routes in the channel, the respective routes to each mobile unit whose power is greater than a determined threshold, and in demodulating the received signal of each of the mobile units in contact with the base station in order to make the spatial demultiplexing possible, and
- in simultaneously transmitting in the direction of the main route of each mobile unit, the signal which is intended for it, while protecting each mobile unit from the signals transmitted to the others by spatial filtering with cancelling constraints to allow the spatial multiplexing.

**11.** Method according to Claim 10, characterized in that it consists in isolating the main routes by spatial filtering.

**12.** Method according to Claim 11, characterized in that the spatial filtering is implemented by an ASF structure associated with a decision and equalization component.

**13.** Method according to Claim 10, characterized in that it consists in isolating the main routes by spatio-temporal filtering.

**14.** Method according to Claim 13, characterized in that the spatio-temporal filtering is implemented by a STAF-TWN structure associated with a decision and equalization component.

**15.** Method according to Claims 12 and 14, characterized in that the decision and equalization component is implemented by a DFE.

**16.** Method according to Claims 12 and 14, characterized in that the decision and equalization component implements the Viterbi algorithm.

**17.** Method according to Claim 13, characterized in that spatio-temporal filtering is implemented by an STAF-DFE structure.

**18.** Method according to any one of Claims 10 to 17, characterized in that the spatial information is estimated on the basis of the value taken by a multipath detection function of the a priori known sequence, at the optimum synchronization time corresponding to the arrival time of the most powerful route.

**19.** Method according to any one of Claims 10 to 18, characterized in that it consists, in each frame, in permuting the transmission and reception frequencies to make it possible to acquire the spatial information on the two frequencies when they are too far apart for this information to be transposable from one to the other.

**20.** Method according to any one of Claims 10 to 19, characterized in that it consists, for optimizing the efficiency of the spatial multiplexing and demultiplexing, in managing the assignment of the channels in all the frequency and time resources allocated to the base station as a function of the movements of the mobile units, by using a criterion of spatial correlation between the mobile units incorporating the spatial information acquired on the two frequencies used alternately for the duplex transmission.

21. Method according to any one of Claims 10 to 20, characterized in that the spatial filtering when transmitting the signal intended for a determined mobile unit is adapted on the basis of a synthetic correlation matrix for noise + interference-source signal, established on the basis of pairs of fictitious interference sources arranged spatially on either side of the mobile units in the direction of which the base station should not transmit this signal, so as to widen the "holes" of the radiation diagram in the direction of the interference sources and consequently to increase the tolerance of the system with respect to aiming errors due to residual errors in setting of the transmission and reception channels.

22. Method according to any one of Claims 10 to 21, characterized in that it consists in periodically applying a procedure of setting and of pre-correction of amplification on transmission in order to limit the aiming errors in transmission.

23. Device for implementing the method according to Claim 10, characterized in that it includes:

- a transmission/reception antenna base (4) coupled to switching and setting means (5),
- a multipath receiver (6) including means for frequency transposition, amplification and analogue/digital conversion, which is coupled to the output of the switching and setting means (5),
- a spatial demultiplexer (7) coupled to the output of the multipath receiver (6) and including a determined number of spatial or spatio-temporal filters, each spatial or spatio-temporal filter respectively forming one spatial or spatio-temporal channel,
- a determined number of demodulators (8i) equal to the number of spatial channels determined per frequency and time channel, which are coupled to the output of the demultiplexer (7) and supply the base station network with the data transmitted by the mobile units,
- a determined number of modulators (11i) equal to the number of demodulators (8i), respectively receiving data to be transmitted by the antenna base (4) to the mobile units,
- a spatial multiplexer (10), coupled to the output of the modulators (11i) and including a determined number of spatial filters equal to the number of modulators (11i),
- a multipath transmitter (9) including means for digital/analogue conversion, frequency transposition and amplification, which is coupled to the output of the spatial multiplexer (10), and

  in that it includes:

- an SDMA digital processing module (12) which includes an SDMA controller (13) and an estimator (14) for estimating the direction vectors of the routes relating to the mobile units based on the signal received from the mobile unit in single-transmission configuration, these mobile units communicating with the base station, and which makes it possible to update the weightings of the spatial filters on transmission and spatial or spatio-temporal filters on reception, manage the transmission and reception frequencies, and control the switching and setting means.

24. Device according to Claim 23, characterized in that the setting means include, for each path (i) formed respectively by each antenna of the antenna base (4):

- a filter (22i) for equalizing the transmission signal, coupled to the input of the transmission system (20i),
- a filter (18i) for equalizing the reception signal, coupled to the output of the reception system (17i),
- a switch at the input (25i) and at the output (26i) of the reception system (17i), a switch (27i) at the input of the transmission system (20i) and a two-way switch (23i) at the output of the transmission system (20i), allowing the device to change to the various operating modes: reception setting, transmission setting, transmission/reception,
- a coupler (21i) arranged between the antenna (Ai) and the two-way switch (23i), making it possible to sample part of the transmission signal and inject it to the input of the reception system (17i) via the input switch (25i) of the reception system (17i),

  and in that it includes, in common for all the paths (i):

- a setting analyser (19) for analysing the various setting signals arriving on the input (27i) and output (26i) switches, respectively, of the transmission (20i) and reception (17i) systems, and for adapting the equalizing filters (22i and 18i) of the transmission and reception systems (20i and 17i).

25. Device according to Claim 24, characterized in that a filter (28i) for pre-correcting the transmission system (20i) is arranged between the equalizing filter of the transmission system (20i) and the transmission system (20i).

26. Device according to any one of Claims 23 to 25, characterized in that it furthermore includes, for permuting the transmission and reception frequencies on the same frequency channel, a frequency permutation controller (16i) coupled respectively to the multipath receiver (6) and transmitter (9), and to the switching and setting means (5).

FIG.1

FIG.2

FIG.3

FIG.4a

FIG.4b

FIG.5

FIG.6

FIG.7

FIG. 8

FIG.9

FIG.10

FIG.11

FIG.12